# EUROPÄISCHE PATENTSCHRIFT

(11) **EP 1 887 484 B1**
(45) Veröffentlichungstag und Bekanntmachung des Hinweises auf die Patenterteilung: **14.10.2009**
(21) Anmeldenummer: 07021917.5
(22) Anmeldetag: 06.11.2003
(51) Int. Cl.: G06F 17/30, H04L 29/06, H04L 29/08

(54) **VERFAHREN ZUM VORABÜBERTRAGEN STRUKTURIERTER DATENMENGEN ZWISCHEN EINER CLIENTEINRICHTUNG UND EINER SERVEREINRICHTUNG**
Method for pre-transmission of structured data sets between a client device and a server device
Procédé de transmission préalable de quantités de données structurées entre un dispositif de client et un dispositif de serveur

(30) Priorität: 06.11.2002 DE 10252017; 18.06.2003 DE 10327876
(43) Veröffentlichungstag der Anmeldung: 13.02.2008
(62) Teilanmeldung aus: 03785501.2
(73) Patentinhaber: Tellique Kommunikationstechnik GmbH, 13507 Berlin (DE)
(72) Erfinder: Nils Seifert, 13505 Berlin (DE); Dr. Jörg Ott, 02180 Espoo (FI)
(74) Vertreter: Bittner, Thomas L.

(56) Entgegenhaltungen:
- WO-A-00/73922
- WO-A-01/14990
- WO-A-99/64967
- DE-A- 10 039 901

## Beschreibung

Die Erfindung liegt auf dem Gebiet des Übertragens strukturierter Datenmengen zwischen Client- und Servereinrichtungen.

### Hintergrund

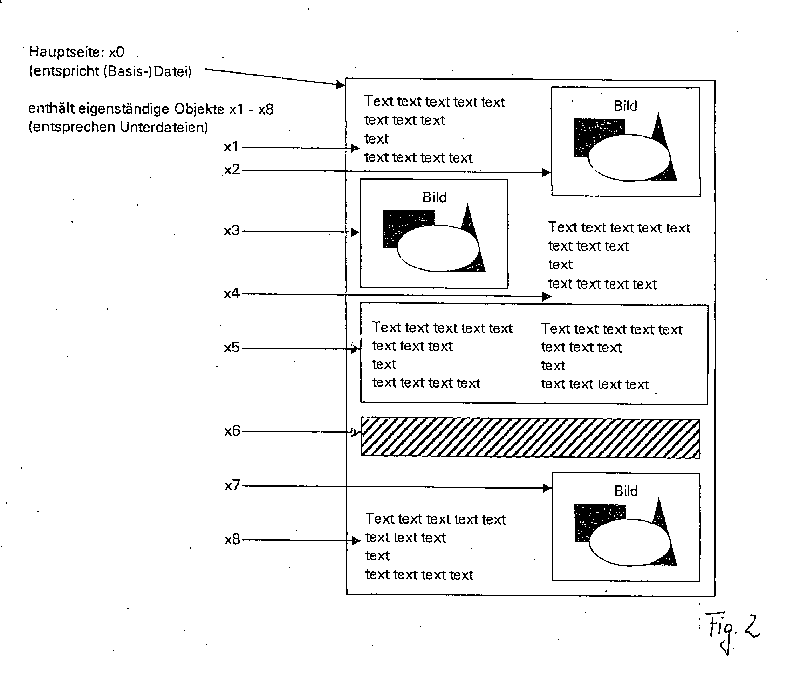

Eine strukturierte Datenmenge kann insbesondere eine Webseite sein, die aus einer Basisdatei und einer Reihe von Unterdateien gebildet wird, wie in Figur 2 schematisch dargestellt ist. Die dargestellte Webseite ist in der Basisdatei x0 beschrieben (z.B. in der Hypertext Markup Language, HTML), wobei die Basisdatei Verweise auf weitere Objekte, die potentiell zur Darstellung der Webseite benötigt werden, enthalten kann. Diese weiteren Objekte können insbesondere als Dateien vorliegen und werden dann als Unterdateien (der Basisdatei) bezeichnet. In Figur 2 sind 8 solcher Objekte (Unterdateien) x1, ..., x8 als dargestellt. Solche Objekte können Text-, Bild-, Graphik-, Audio-, Video-Objekte usw. sein, sie können aber insbesondere auch wiederum strukturierte Informationen (z.B. in HTML) enthalten, die wie die Basisdatei selbst dann wiederum Verweise auf weitere Unterdateien enthalten können, so dass sich diese Schachtelung rekursiv fortsetzen kann. Die Anzahl der Unterdateien und ihre Schachtelungstiefe pro Webseite sind beliebig und können sich für verschiedene Seiten unterscheiden.

Stand der Technik für ein Verfahren dieser Art ist in der Druckschrift DE 100 39 901 beschrieben. Darüber hinaus ist in der Druckschrift DE 100 39 901 ein Verfahren beschrieben, daß mit Hilfe einer Client-Proxyeinrichtung und einer Server-Proxyeinrichtung ein wesentlich schnelleres Übertragen über Übertragungsnetze, welche beispielsweise hohe Übertragungsverzögerungen aufweisen, ermöglicht. Bei den Übertragungsnetzen, die nachteilige hohe Übertragungsverzögerungen aufweisen, kann es sich beispielsweise um Satellitennetze handeln.

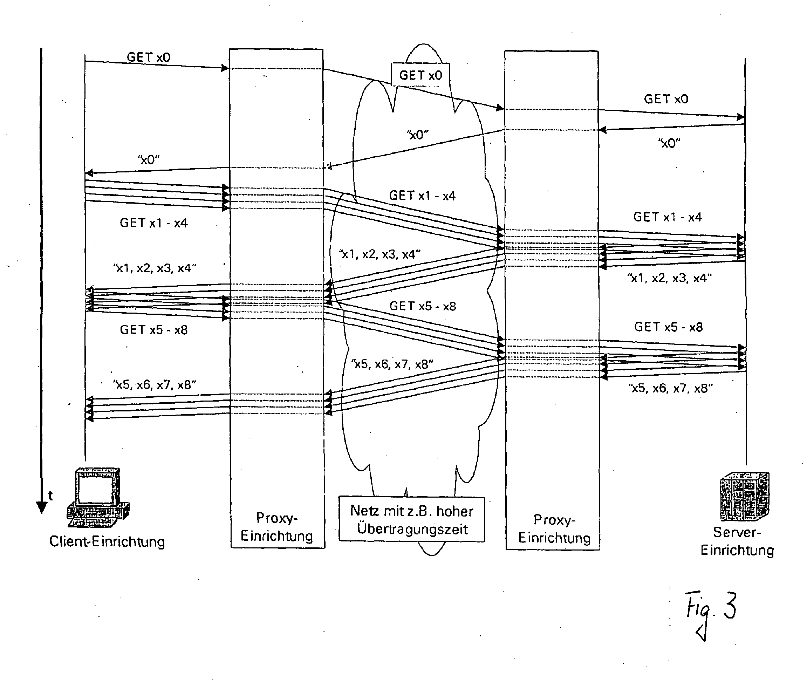

Der vor der Druckschrift DE 100 39 901 bestehende und in der Druckschrift DE 100 39 901 kritisch bewertete Stand der Technik ist beispielhaft in Figur 3 dargestellt. Eine Clienteinrichtung (z.B. ein Web-Browser) greift über zwei einfache Proxyeinrichtungen auf eine Servereinrichtung (z.B. ein Web-Server) z.B. im Internet zu, um eine Webseite abzurufen, die beispielhaft entsprechend der in Figur 2 dargestellten strukturiert ist. Dabei verläuft die Kommunikation zwischen der Client- und der Servereinrichtung insbesondere über ein Netz mit hoher Übertragungszeit (z.B. ein Satellitennetz). Zum Zugriff auf die Webseite stellt die Clienteinrichtung zunächst eine Anfrage nach der Basisdatei x0 und erhält dann diese von der Servereinrichtung in einer ersten Antwort. Die Clienteinrichtung analysiert dann die Basisdatei x0 und findet eine Reihe von eingebetteten Objekten x1, ..., x8, die sie im folgende in zwei Runden von der Servereinrichtung abfragt. Aufgrund der hohen Übertragungszeit innerhalb des Netzes dauert der Vorgang vom ersten Anfragen nach der Webseite bis zur vollständigen Darstellung in der Clienteinrichtung sehr lange.

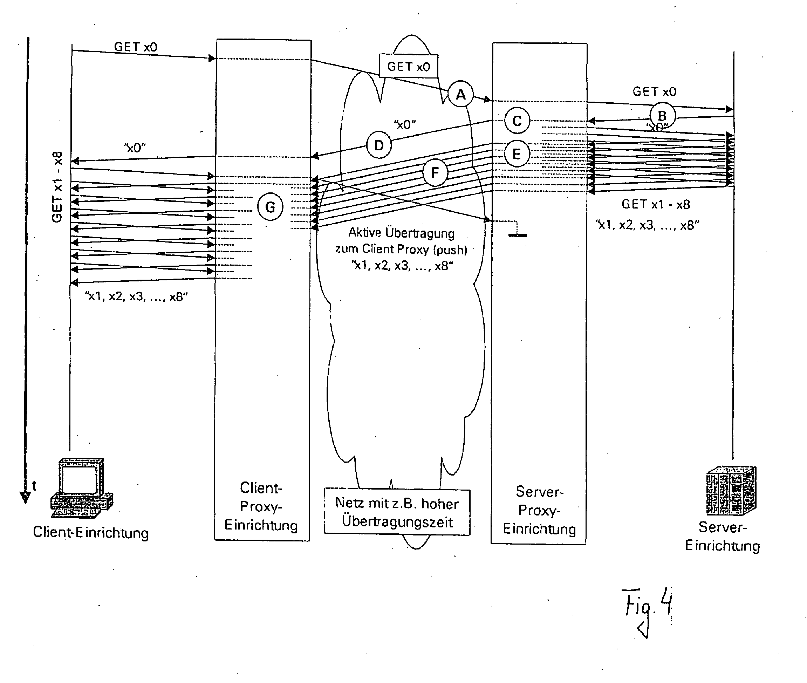

In der Druckschrift DE 100 39 901 wird dieser Stand der Technik durch Einführung eines verteilten Proxies verbessert, der aus einer Client-Proxyeinrichtung und einer Server-Proxyeinrichtung besteht, wie in Figur 4 dargestellt ist. Dabei kann insbesondere vorgesehen sein, die Client-Proxy- und Server-Proxyeinrichtung so zu platzieren, dass sie das Netz mit großer Übertragungsverzögerung umschließen. Wie Figur 4 zu entnehmen (und in der Druckschrift DE 100 39 901 im Detail ausgeführt) ist, wird zur Steigerung der Effizienz beim Zugriff auf strukturierte Datenmengen durch eine Anfrage (A) die Analyse einer Basisdatei x0 (und entsprechender Unterdateien) ergänzend in der Server-Proxyeinrichtung durchgeführt (C), nachdem die Basisdatei von der Servereinrichtung erhalten (B) und bevor, nachdem oder während sie zur Client-Proxyeinrichtung weitergeleitet wird (D). Die dabei gefundenen Objekte (Unterdateien, in diesem Beispiel x1, ..., x8) werden dann eigenständig durch die Server-Proxyeinrichtung von der Servereinrichtung angefragt (E) und die von der Servereinrichtung erhaltenen Objekte werden ebenfalls an die Client-Proxyeinrichtung weitergeleitet (F), auch wenn für die Objekte noch gar keine Anfrage vorliegt. In der Client-Proxyeinrichtung werden die von der Server-Proxyeinrichtung empfangenen Objekte (Dateien, Unterdateien) zwischengespeichert, und anschließend werden von der Clienteinrichtung eingehende Anfragen nach diesen Objekten aus dem Speicher beantwortet (G). Dieses Vorgehen wird im folgenden auch als "Prefetching" bezeichnet, da Unterdateien bzw. Objekte vorab von einer Servereinrichtung angefordert werden.

### Die Erfindung

Ausgehend von dem Stand der Technik besteht Bedarf für ein Verfahren, welches die Effizienz und die Geschwindigkeit des Übertragens von strukturierten Datenmengen zwischen einer Clienteinrichtung und einer Servereinrichtung, insbesondere in Verbindung mit dem Übertragen von Webseiten aus dem Internet, und einem zwischengeschaltetem Übertragungsnetz weiter optimiert.

Darüber hinaus besteht die Aufgabe, die von einer zwischengeschalteten Client-Proxyeinrichtung bzw. Server-Proxyeinrichtung erfolgenden Zugriffe auf das umliegende Netzwerk nachvollziehbar zu machen und/oder diese Zugriffe möglichst eindeutig auf eine bestimmte Clienteinrichtung zurückführen zu können.

Weiterhin stellt sich die Aufgabe, eine möglichst geringe/kurze Nutzung und/oder Belastung der rückwärtigen Übertragungsrichtung zu ermöglichen. Dem liegt zugrunde, dass oftmals beim Empfangen von Daten in einer Richtung zusätzlich Daten in rückwärtiger Richtung ausgetauscht werden müssen. Bei den rückwärtig ausgetauschten Daten kann es sich beispielsweise um Anforderungen nach Objekten und insbesondere Unterobjekten handeln oder um Bestätigungen oder Handshakes im Rahmen des Datenaustausches.

Die Aufgaben werden durch Verfahren nach den unabhängigen Ansprüchen gelöst. Bevorzugte Ausgestaltungen sind Gegenstand von abhängigen Unteransprüchen.

### Figurenbeschreibung

Im folgenden werden die Aspekte der Erfindung anhand von Ausführungsbeispielen unter Bezugnahme auf Figuren näher erläutert. Hierbei zeigen:
- Figur 1: eine schematische Darstellung von mehreren Systemen zur Datenübertragung mit einer Clienteinrichtung und einer Servereinrichtung;
- Figur 2: eine schematische Darstellung einer strukturierten Datenmenge anhand einer Webseite;
- Figur 3: eine schematische Darstellung zur Erläuterung eines Verfahrens zur Datenübertragung zwischen einer Clienteinrichtung und einer Servereinrichtung nach dem Stand der Technik;
- Figur 4: eine schematische Darstellung zur Erläuterung eines weiteren Verfahrens zur Datenübertragung zwischen einer Clienteinrichtung und einer Servereinrichtung nach dem Stand der Technik; und
- Figur 5: eine schematische Darstellung zur Erläuterung eines Verfahrens zur Datenübertragung zwischen einer Clienteinrichtung und einer Servereinrichtung gemäß der Erfindung.

### Beschreibung von Ausführungsbeispielen

Nachfolgend werden verschiedene Aspekte der Erfindung im Detail dargestellt, wobei die Merkmale der verschiedenen Aspekte sowohl einzeln auch in beliebiger Kombination bei der Verwirklichung der Erfindung in ihren verschiedenen Ausführungsformen von Bedeutung sein können. Insbesondere ergeben die verschiedenen Aspekte jeweils für sich eine wesentliche Verbesserung des Standes der Technik.

Zur Erleichterung des Verständnisses der unterschiedlichen Aspekte der Erfindung wird hierbei zunächst jeweils kurz auf den Hintergrund (Abschnitt (i)) zu dem Aspekt eingegangen, um anschließend die spezielle Problematik (Abschnitt (ii)) und eine oder mehrere bevorzugte Ausführungsform des Erfindungsaspekts (Abschnitt (iii)) zu beschreiben. Zu einigen der Erfindungsaspekte werden in einem Abschnitt (iv) dann Ausgestaltungen beschrieben, bei denen es sich teilweise um Alternativen handelt.

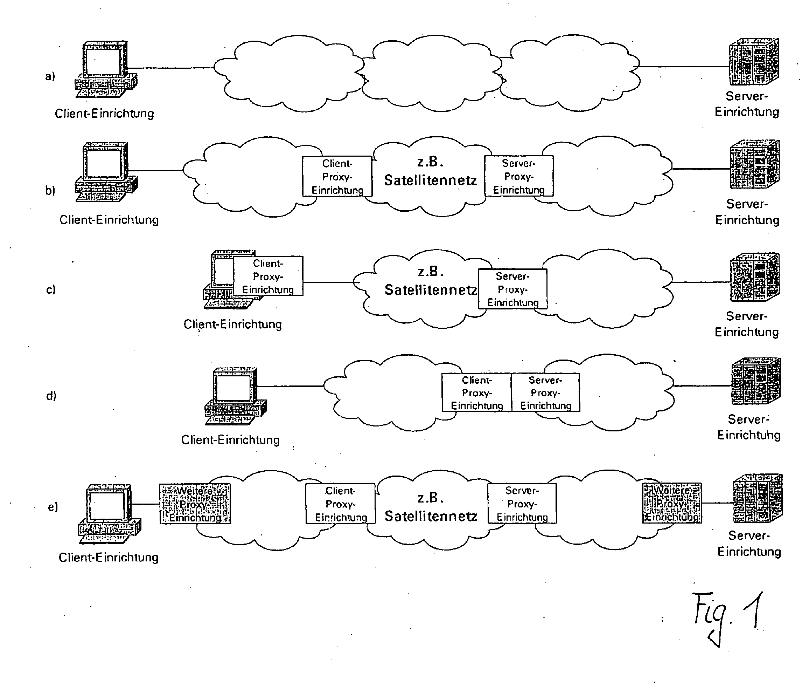

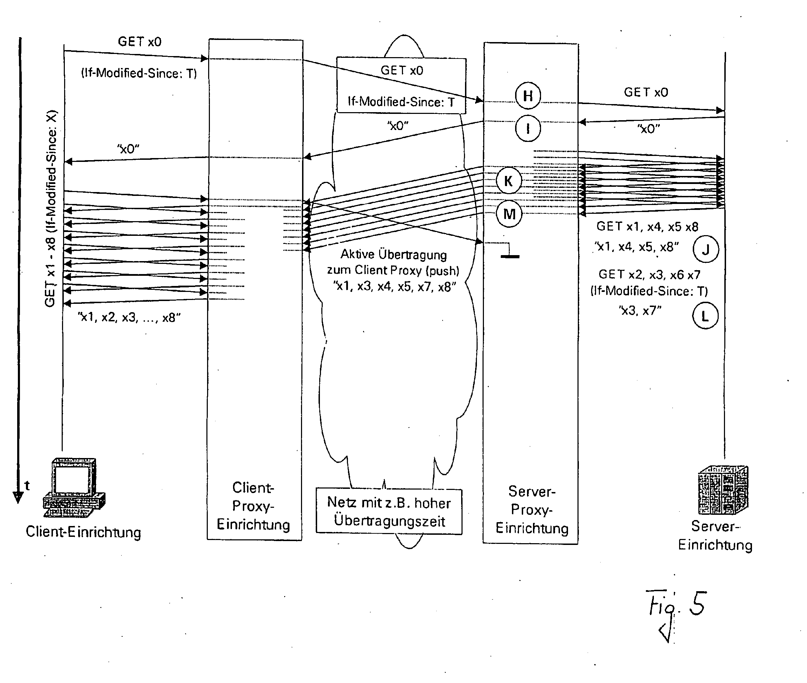

Einige mögliche Anordnung unter Verwendung der Client-Proxyeinrichtung und der Server-Proxyeinrichtung ist in Figur 1 dargestellt. 1a) zeigt den allgemeinen Kommunikationsweg zwischen einer Clienteinrichtung und einer Servereinrichtung über ein oder mehrere Netze. 1b) zeigt die Nutzung der Client-Proxyeinrichtung und der Server-Proxyeinrichtung, um die Kommunikation über ein Netz mit hoher Übertragungszeit (z.B. ein Satellitennetz) zu optimieren; dabei umschließen die Client-Proxyeinrichtung und die Server-Proxyeinrichtung das Netz mit hoher Übertragungszeit. Die Kommunikation mit der Clienteinrichtung und der Servereinrichtung erfolgt jeweils über ein weiteres Kommunikationsnetz. 1c) zeigt eine Integration der Client-Proxyeinrichtung und der Clienteinrichtung z.B. auf demselben Computersystem, so dass die Kommunikation zwischen der Clienteinrichtung und der Client-Proxyeinrichtung nicht mehr über ein Netz erfolgt, sondern lokal innerhalb eines Computersystems abläuft. 1d) stellt eine ebenfalls vorteilhafte Ausprägung dar, in der die Client-Proxyeinrichtung und die Server-Proxyeinrichtung nicht durch ein Kommunikationsnetz getrennt sind, sondern z.B. innerhalb eines Computersystems integriert sind. Diese Integration kann auf demselben Computersystem innerhalb eines Prozesses oder als getrennte Prozesse erfolgen. 1e) stellt schließlich eine Konstellation dar, in der sich im Kommunikationsweg zwischen der Clienteinrichtung und der Servereinrichtung neben der Client-Proxy- und der Server-Proxyeinrichtung weitere Proxyeinrichtungen (z.B. Web-Proxies oder Web-Caches) befinden. Hiervon können jeweils keine, eine oder mehrere sowohl zwischen der Clienteinrichtung und der Client-Proxyeinrichtung und/oder zwischen der Server-Proxyeinrichtung und der Servereinrichtung vorhanden sein. Diese Konstellation mit weiteren Proxyeinrichtungen kann ebenso entsprechend 1c) oder 1d) aufgebaut sein.
1. Bedingte Anfragen
   (i) Von Clienteinrichtungen (z.B. Web-Browsern) werden oftmals bedingte Anfragen an eine Servereinrichtung (z.B. Web-Server) gestellt, sogenannte "Conditional GET"-Anfragen. In diesem Fall will die Clienteinrichtung das angefragte Objekt (Datei/Unterdatei, z.B. x0) nur dann zugestellt bekommen, wenn eine bestimmte, in der Anfrage spezifizierte Bedingung erfüllt ist.
      Die üblichste Bedingung ist eine Abhängigkeit vom letzten Änderungsdatum eines Objekts ("If-Modified-Since"). Die Clienteinrichtung gibt als Bedingung an, dass das Objekt nur dann in der Antwort übertragen werden soll, wenn es nach einem bestimmten (in der Anfrage angegebenen) Zeitpunkt T modifiziert wurde (in der Regel hat die Clienteinrichtung in diesem Fall eine Kopie des Objektes - datiert auf den Zeitpunkt T - in ihrem internen Cache).
      Eine Servereinrichtung antwortet auf diese bedingten Anfragen entweder nur mit einer Statusinformation (beispielsweise, dass sich das Objekt seit dem angegebenen Zeitpunkt eben nicht geändert hat) oder aber beispielsweise mit dem vollständigen Objekt (wenn sich das Objekt seit dem angegebenen Zeitpunkt geändert hat), was durch eine Statusinformation ergänzt werden kann.
   (ii) Wenn solch eine bedingte Anfrage nur mit einer Statusinformation beantwortet wird, wird die Clienteinrichtung (Browser) die Kopie des Objekts (z.B. x0) aus dem lokalen Cache verwenden und analysieren. Stößt sie dabei auf eingebettete Objekte (Unterdateien x1, ..., x8), wird die Clienteinrichtung in der Regel anschließend auch jeweils eine bedingte Anfrage (mit gleicher oder ähnlicher oder ganz anderer) Bedingung für die einzelnen Unterdateien (x1, ..., x8) stellen.
      All diese Anfragen aber über ein Netz mit hoher Übertragungszeit zu übertragen, kostet sehr viel Zeit (viele Round-Trip-Times RTTs), so dass der Benutzer lange auf die Verfügbarkeit der angeforderten strukturierten Datenmenge (und damit z.B. auf die vollständige Anzeige der angeforderten Webseite) warten muss.
      Wird ein Verfahren gemäß DE 100 39 901 A1 mit einer Client-Proxyeinrichtung und einer Server-Proxyeinrichtung eingesetzt, kann die Servereinrichtung ihre Aufgabe - nämlich die Analyse der Datei x0 und das anschließende Vorab-Übertragen von enthaltenen Unterdateien - potentiell nicht erfüllen. Die Server-Proxyeinrichtung würde nämlich die "bedingte Anfrage" mehr oder weniger unverändert - also auch als "bedingte Anfrage" an die Servereinrichtung weiterleiten.
      Ist die Bedingung nicht erfüllt, wird die Antwort der Servereinrichtung aber potentiell nur eine Statusinformation ("das Objekt hat sich nicht verändert seit...") enthalten, nicht aber den Inhalt der Datei x0 selbst. Aus der Statusinformation allein kann die Server-Proxyeinrichtung aber nicht die Existenz und/oder die Namen und/oder weitere Information über Unterdateien ableiten. Daher kann die Server-Proxyeinrichtung nach der Druckschrift DE 100 39 901 nur diese Statusinformation weiterleiten, ihre eigentliche Beschleunigungsfunktion aber nicht wahrnehmen. Sie müsste darauf warten, anschließend von der Clienteinrichtung über die Client-Proxyeinrichtung (bedingte) Anfragen für die einzelnen Unterdateien zu erhalten (nachdem die Clienteinrichtung das im lokalen Cache vorliegende Objekt analysiert hat), die sie stückweise an die Servereinrichtung weitergibt, worauf die von der Servereinrichtung wiederum potentiell nur Statusinformationen erhält, die sie dann ebenfalls nur einzeln als Statusinformationen an die Client-Proxyeinrichtung und diese die Statusinformationen dann an die Clienteinrichtung weiterleiten kann.
      Damit ist der Stand der Technik nach der Druckschrift DE 100 39 901 unzureichend, um eine effiziente Kommunikation im Falle von bedingten Anfragen (wie sie im Internet sehr verbreitet sind) durchzuführen.
   (iii) Es wird deshalb das folgende Verfahren in der Client-Proxyeinrichtung und/oder der Server-Proxyeinrichtung ausgeführt:
      a) Die Client-Proxyeinrichtung empfängt eine bedingte Anfrage (z.B. nach einer Datei x0) und leitet sie unverändert an die Server-Proxyeinrichtung weiter.
      b) Die Server-Proxyeinrichtung stellt statt einer bedingten nun aber eine normale (unbedingte) Anfrage (z.B. nach der Datei x0) an die Servereinrichtung und erhält dementsprechend nicht nur eine Statusinformation, sondern die vollständige Datei/Objekt.
         Alternativ kann die Server-Proxyeinrichtung sowohl eine bedingte als auch eine normale (unbedingte) Anfrage an die Servereinrichtung stellen. Dies kann unter anderem vorteilhaft sein, da sie so (potentiell schneller) die Antwort auf die bedingte Anfrage an die Client-Proxyeinrichtung weiterleiten kann und dennoch über die normale (unbedingte) Anfrage die vollständige Datei/Objekt (x0) erhält. In diesem Fall kann die Servereinrichtung in Schritt d) die Antworten auf die bedingt gestellten Anfragen auch ohne ein eigenständiges Auswerten der Bedingung an die Clienteinrichtung weiterleiten.
         Alternativ - und das gilt für jedes Vorkommen einer in eine normale (unbedingte) Anfrage umgewandelten bedingten Anfrage - kann statt gar keine Bedingung anzugeben auch die angegebene Bedingung auf eine geeignete Weise modifiziert werden. Es wird dann eine bedingte Anfrage durch eine andere bedingte Anfrage mit modifizierter Bedingung ersetzt. Eine unbedingte Anfrage stellt sich als ein Spezialfall dieser allgemeinen Form dar. Zur Vereinfachung wird im folgenden in diesem Zusammenhang aber immer von einer normalen (unbedingten) Anfrage gesprochen, was dann stellvertretend auch für eine Anfrage mit modifizierter Bedingung steht.
      c) Aus der erhaltenen Datei (x0) ermittelt die Server-Proxyeinrichtung nun die enthaltenen Unterdateien (z.B. x1, ..., x8) und stellt für diese ebenfalls eine bedingte oder unbedingte Anfrage an die Servereinrichtung.
         Dabei stellt die Server-Proxyeinrichtung insbesondere dann eine unbedingte Anfrage nach einer Unterdatei xi an die Servereinrichtung, wenn beispielsweise der Typ der Unterdatei xi darauf hinweist, dass xi wiederum eine strukturierte Datenmenge enthält, in der Verweise auf weitere Unterdateien enthalten sein können. Dies kann insbesondere dann der Fall sein, wenn es sich bei xi um eine HTML-Datei handelt, kann aber auch für andere Dateitypen sinnvoll sein. Geht aus dem Typ der Unterdatei xi hervor, dass xi keine strukturierte Datenmenge mit potentiellen Verweisen auf weitere Unterdateien enthält, kann die Server-Proxyeinrichtung auf das Stellen einer normalen (unbedingten) Anfrage verzichten und statt dessen nur die bedingte Anfrage der Clienteinrichtung an die Servereinrichtung stellen. Beispiele für solche Unterdateien, die wahrscheinlich keine weiteren Unterdateien enthalten, sind Bilder und Tondateien. Diese Schritte können für die in der Proxy-Servereinrichtung empfangenen Unterdateien rekursiv fortgesetzt werden.
         Dabei trifft die Server-Proxyeinrichtung die Annahme, dass die Clienteinrichtung bzw. Client-Proxyeinrichtung ebenfalls bedingte Anfragen für die Unterdateien stellen wird (und zwar mit der gleichen Bedingung).
      d) Parallel zu c) leitet die Server-Proxyeinrichtung die erhaltenen Dateien an die Client-Proxyeinrichtung weiter. Dabei wandelt sie aber (u.a. um Übertragungskapazität zu sparen) die Antworten, soweit möglich, wieder in Statusinformationen entsprechend der ursprünglich empfangenen "bedingten" Anfragen um. Das bedeutet, die Server-Proxyeinrichtung kann nur dann die ganzen Dateien weiterleiten, wenn die Bedingung der Anfrage zutrifft. Hierzu kann es notwendig sein, dass die Server-Proxyeinrichtung die Bedingung selbst auswertet, wie es sonst die Servereinrichtung getan hätte.
         Zusätzlich (neben den Dateien) kann die Server-Proxyeinrichtung weitere Informationen an die Client-Proxyeinrichtung weiterleiten. Diese weiteren Informationen können Informationen bezüglich der Bedingungen in der bedingten Anfrage (Anfragen von Schritt b und/oder c) und/oder die entsprechenden Antworten von der Servereinrichtung umfassen und/oder Informationen über die von der Server-Proxyeinrichtung in Schritt d) vorgenommene(n) Auswertung(en) der Bedingung.
         Das Weiterleiten dieser "Bedingungs"-Informationen kann auf vielfältige Weise erfolgen. Beispielsweise können die "Bedingungs"-Informationen übermittelt werden als Angabe oder durch Mitsenden des gestellten Anfrage-Headers und/oder des Antwort-Headers, als Checksumme über diesen Header, als Auszug des Headers oder Checksumme über einen Auszug dieses Header, und/oder als Angabe der expliziten Einzelkriterien der "Bedingungs"-Informationen und/oder einiger dieser Einzelkriterien oder einer Checksumme über alle oder Teile der Einzelkriterien.
      e) Die Client-Proxyeinrichtung gibt die Daten entsprechend der eingehenden Anfragen an die Clienteinrichtung weiter. Dabei kann sie zusätzlich prüfen, ob die von der Server-Proxyeinrichtung getroffene(n) Annahme(n) (etwa dass die Unterdateien mit einer ähnlichen/gleichen Bedingung angefordert werden) korrekt war und ggf. explizite neue Anfragen an die Server-Proxyeinrichtung senden. Dieser Prüfung muss nicht für alle Anfragen erfolgen, da bei üblichen Clienteinrichtungen (Web-Browsem) sehr oft eine Übereinstimmung festgestellt wird.
      Eine Ausführungsform des Verfahrens ist in Figur 5 dargestellt. Eine bedingte Anfrage nach einer Basisdatei x0 ("GET x0, If-Modified-Since: T") wird von der Clienteinrichtung über die Client-Proxyeinrichtung an die Server-Proxyeinrichtung gestellt. Dort wird die bedingte Anfrage in eine normale (unbedingte) Anfrage umgewandelt (H) und an die Servereinrichtung weitergeleitet. Die Servereinrichtung antwortet daraufhin mit dem Inhalt der Basisdatei x0 ("x0"), der in diesem Ausführungsbeispiel direkt an die Client-Proxyeinrichtung und von dort an die Clienteinrichtung weitergegeben wird. Parallel wird der Inhalt der erhaltenen Basisdatei x0 in der Server-Proxyeinrichtung analysiert (I). Im dargestellten Beispiel werden 8 Objekte (Unterdateien) x1, ..., x8 gefunden. Dem Typ nach seien beispielsweise die Objekte x2, x3, x6, x7 Bilder, die Objekte x1, x4, x5, x8 hingegen HTML-Dateien. Da die HTML-Dateien x1, x4, x5, x8 potentiell weitere Verweise enthalten können, werden auch sie mittels normaler (unbedingter) Anfragen von der Servereinrichtung angefordert (J), die dann die entsprechenden Objekte (Unterdateien) zurückliefert, welche daraufhin durch die Server-Proxyeinrichtung an die Client-Proxyeinrichtung weitergeleitet und in der Server-Proxyeinrichtung auf weitere Unterdateien untersucht werden (K). Im vorliegenden Ausführungsbeispiel werden aber keine Verweise auf weitere Unterdateien gefunden. Da die Bildobjekte x2, x3, x6, x7 keine Verweise auf Unterdateien enthalten können, werden sie mittels bedingter Abfragen (hier unter Verwendung des gleichen Datums T in der Bedingung "If-Modified-Since: T") von der Servereinrichtung angefragt (L). Im Beispiel haben sich nur die Objekte x3 und x7 geändert, so dass nur diese Objekte von der Servereinrichtung zur Server-Proxyeinrichtung übertragen und von dieser an die Client-Proxyeinrichtung weitergeleitet werden (M). Für die nicht geänderten Objekte x2 und x6 werden nur Statusinformationen von der Servereinrichtung über die Server-Proxyeinrichtung zur Client-Proxyeinrichtung weitergegeben. Die Zwischenspeicherung der von der Server-Proxyeinrichtung erhaltenen Objekte und die Beantwortung von weiteren Anfragen der Clienteinrichtung durch die Client-Proxyeinrichtung erfolgt beispielsweise wie oben für die Druckschrift DE 100 39 901 beschrieben.
   (iv)Bei dem beschriebenen Verfahren können zur Fortbildung die folgenden Alternativen vorgesehen sein:
      Verfeinerung zu Schritt c)
         Für Dateien, bei denen anzunehmen ist, dass sie selbst keine Unterdateien enthalten (wie beispielsweise Bilder), wandelt die Server-Proxyeinrichtung die bedingten Anfragen nicht in normale (unbedingte) Anfragen um, da der Inhalt dieser Dateien für die Vorab-Übertragung wahrscheinlich keine weitere Informationen liefern würde.
      Verfeinerung zu Schritt d)
         Stellt eine Client-Proxyeinrichtung oder Server-Proxyeinrichtung eine normale (unbedingte) Anfrage nach einer (Unter-)Datei an eine Servereinrichtung, so erhält sie neben der Datei optional ein letztes Änderungsdatum von der Servereinrichtung als Bestandteil der Antwort. Es kann zweckmäßig sein, dass die Client-Proxyeinrichtung und/oder die Server-Proxyeinrichtung ein in der Antwort fehlendes Änderungsdatum durch ein selbst generiertes ergänzt und/oder ein in der Antwort enthaltenes vorhandenes Änderungsdatum durch ein selbst generiertes ersetzt. Dieses selbst generierte Änderungsdatum kann beispielsweise das aktuelle Datum der Client-Proxyeinrichtung, der Server-Proxyeinrichtung oder der Servereinrichtung sein (letzteres kann die Client-Proxyeinrichtung oder die Server-Proxyeinrichtung beispielsweise aus anderen Parametern der Antwort auf eine Anfrage gelernt haben). Dies kann zweckmäßig sein, da die Server-Proxyeinrichtung in Schritt d) für die erhaltenen Unterdateien einen Bedingungsvergleich mit beispielsweise dem letzten Änderungsdatum aus der Anfrage der Basisdatei macht.
         Die Vorteile des beschriebenen Erfindungsaspekts werden anhand des folgenden Beispiels verständlicher:
         Eine Datei a.html enthält ein Bild a.gif als Unterdatei. Die Datei a.html wurde auf der Servereinrichtung zuletzt am 1.1.2002 geändert, das Bild a.gif zuletzt am 1.2.2002.
         Am 10.2.2002 wird die Datei a.html von der Clienteinrichtung abgefragt (und damit auch die Unterdatei a.gif). Beide Dateien werden im internen Cache der Clienteinrichtung gespeichert.
         Am 1.3.2002 wird die Datei a.html auf der Servereinrichtung geändert.
         Irgendwann nach dem 1.3.2002 fragt dieselbe Clienteinrichtung nochmals die Datei a.html ab und gibt dabei - entsprechend des Änderungsdatums der Datei a.html im internen Cache - die Bedingung "If-Modified-Since: 1.1.2003" an.
         Die Server-Proxyeinrichtung stellt fest, dass sich die Datei a.html seit dem 1.1.2003 geändert hat und überträgt die Datei neu an die Clienteinrichtung. Nach der Analyse der Datei a.html stellt die Server-Proxyeinrichtung eine Anfrage nach der Unterdatei a.gif und verwendet dabei ebenfalls die Bedingung "If-Modified-Since: 1.1.2003" (es wird eine bedingte Anfrage verwendet, da davon auszugehen ist, dass sich in dem Bild keine Verweise auf weitere Unterdateien enthalten sind). Als Antwort erhält die Server-Proxyeinrichtung die Unterdatei des Bildes (da sie zuletzt am 1.2.2003 und damit nach dem 1.1.2003 geändert wurde) und leitet diese unnötigerweise an die Client-Proxyeinrichtung weiter.
         Hätte die Server-Proxyeinrichtung dagegen bei der Anfrage am 10.2.2003 für alle oder einige der übertragenen (Unter-)Dateien (hier a.gif) als letztes Änderungsdatum das aktuelle Datum angegeben, wäre dieser unnötige Datentransfer vermieden worden.
      Statt eines selbst generierten Änderungsdatums kann die Server-Proxyeinrichtung beispielsweise auch das letzte für ein Objekt bzw. eine (Unter-)Datei dieser strukturierten Datenmenge (z.B. Webseite) geltende Änderungsdatum einsetzen. Oder die Server-Proxyeinrichtung kann ein anderes vom aktuellen Datum abweichendes Datum verwenden. Die entsprechenden Modifikationen können auch oder ergänzend durch die Client-Proxyeinrichtung - mit oder ohne Koordination mit der Server-Einrichtung durchgeführt werden.
      Es kann vorgesehen sein, dass die Server-Proxyeinrichtung die Veränderung des an die Client-Proxyeinrichtung gemeldeten (bzw. von dieser an die Clienteinrichtung gemeldeten) letzten Änderungsdatums auch nur bei bestimmten Anfragen vornimmt. Beispielsweise kann eine derartige Änderung bei Anfragen unterlassen werden, die nicht zur Anforderung großer Datenmengen oder nur zur Anforderung von Header-Informationen führen (letzteres beispielsweise durch eine HTTP-HEAD-Anfrage). Eine Entscheidung zur Änderung des weitergegebenen letzten Änderungsdatums kann auch abhängig davon gemacht werden, ob eine solche Änderung zu Problemen etwa bei der Bearbeitung zukünftiger Anfragen führen könnte. Dies kann bei bestimmten Anfragetypen, bei bestimmten Servereinrichtungen und/oder bei bestimmten Datei-/Objekt-Typen der Fall sein.
      Alternativ kann vorgesehen sein, dass die Änderung des letzten Änderungsdatums nicht (nur) durch die Server-Proxyeinrichtung beim Weiterleiten von Informationen an die Client-Proxyeinrichtung stattfindet, sondern stattdessen oder zusätzlich erst bei einer später bei Client-Proxyeinrichtung und/oder Server-Proxyeinrichtung eingehenden bedingten Anfrage. Dies hat den Vorteil, dass auf diese Weise stets/oft die korrekten Änderungszeiten für Dateien/Objekte an die Clienteinrichtung gegeben werden. In diesem Fall würde die Client-Proxyeinrichtung oder die Server-Proxyeinrichtung bei einem späteren erneuten Abfragen der Datei etwa durch den Benutzer an der Clienteinrichtung (z.B. durch ein "Reload" im Web-Browser) in der Regel eine bedingte Anfrage erhalten, in der das unveränderte der Clienteinrichtung bekannte letzte Änderungsdatum enthalten ist. Dabei kann die Client-Proxyeinrichtung oder die Server-Proxyeinrichtung nun beispielsweise anhand von gespeicherten Informationen über vorangehende Anfragen dieser Clienteinrichtung bzw. dieser Client-Proxyeinrichtung (etwa anhand des Datums der letzten Übertragung der angefragten Dateien/Unterdateien) eine Entscheidung treffen, wie das ansonsten geänderte Änderungsdatum ausgesehen hätte.
      Alternativ können die Server-Proxyeinrichtung oder die Client-Proxyeinrichtung zusätzlich oder anstelle des Änderns des zusammen mit Dateien/Objekten in Richtung Clienteinrichtung (also von der Server-Proxyeinrichtung an die Client-Proxyeinrichtung und/oder von der Client-Proxyeinrichtung an die Clienteinrichtung) weitergegebenen und gegebenenfalls modifizierten letzten Änderungsdatums für alternative Verfahren Informationen auch als separates Header-Feld, als Cookie-Information oder als Information in anderer Form anstelle bzw. zusätzlich zu dem normalerweise für das Änderungsdatum genutzten Feldes weitergeben.
      Somit sind die bekannten HTTP-Cookies nur ein Beispiel für Cookies und Cookie-Informationen. Ein bekannter HTTP-Cookie hat dabei einen Namen, einen Wert und einen Geltungsbereich; andere Cookies können beliebig anders aufgebaut sein, es muss ihnen auch keine innere Struktur ansehbar sein. Die Begriffe Cookie und Cookie-Information werden allgemein im weitesten Sinne als eine beliebige Zusatzinformation verstanden, die zusätzlich auf geeignete Weise kommuniziert werden, und umfassen HTTP-Cookies nur als einen Sonderfall. Falls die Informationen als Cookie-Informationen übertragen werden, kann dies durch die Nutzung eines existierenden Cookies und/oder durch die Einführung eines zusätzlichen Cookies durch die Server-Proxyeinrichtung oder Client-Proxyeinrichtung geschehen. Bei der Nutzung eines existierenden Cookies können die ergänzten Informationen beispielsweise zusätzlich (etwa durch ein Trennzeichen separiert) im Wert dieses Cookies untergebracht werden.
      Die Änderung des weitergegebenen letzten Änderungsdatums kann alternativ auch von der Client-Proxyeinrichtung (Schritt e) vorgenommen werden. Hierbei kann die Server-Proxyeinrichtung beispielsweise das korrekte Datum oder kein Datum oder ein empfohlenes Datum an die Clienteinrichtung und/oder Client-Proxyeinrichtung senden.
      Ein alternative Ausführungsform sieht vor, dass die Server-Proxyeinrichtung als Antwort auf die von der Clienteinrichtung bzw. Client-Proxyeinrichtung erhaltenen (bedingte) Anfragen stets oder zum Teil auch dann nicht nur Statusinformationen (ohne bzw. nur mit Teilen der angefragten Datei(en)) an die Client-Proxyeinrichtung liefert, wenn dies möglich wäre, sondern die gesamte angefragte Datei an die Client-Proxyeinrichtung weiterleitet. Dieser Vorgehen führt zwar zu zusätzlichem zwischen der Server-Proxyeinrichtung und der Client-Proxyeinrichtung übertragenem Datenvolumen - ist aber immer noch (wegen des auf der Seite der Server-Proxyeinrichtung möglichen Prefetchings) meist viel schneller als ohne Prefetching. Die Entscheidung, in welchen Fällen eine Umwandlung in Statusinformationen zum Weiterleiten an die Client-Proxyeinrichtung stattfindet und wann nicht, kann eine feste Einstellung sein (immer/nie) und/oder auch von einem oder mehreren Parametern abhängig sein: Beispiele für solche Parameter können unter anderem die Größe der zu übertragenden Datei oder die verfügbaren Übertragungsbandbreite sein Diese Parameter können durch den Benutzer der Clienteinrichtung und/oder durch die Client-Proxyeinrichtung und/oder den Betreiber der Server-Proxyeinrichtung und/oder durch ein Netzwerkmanagement manuell und/oder automatisch eingestellt werden, wobei dann die Einstellungen geeignet an die Proxy-Servereinrichtung übermittelt werden. Die Entscheidung kann auch direkt durch eine der vorgenannten Instanzen getroffen werden und wird dann der Server-Proxyeinrichtung übermittelt.
      In einer weitere alternativen Ausführungsform antworten die Client-Proxyeinrichtung und/oder die Server-Proxyeinrichtung von sich aus (d.h. ohne die Abfrage an die Server-einrichtung weiterzuleiten) auf zeitlich ("If-Modified-Since") bedingte Anfragen mit einer selbst generierten Statusinformation (beispielsweise "unmodified", falls der angegebene Zeitpunkt nicht länger als eine bestimmte - vorgegebene oder dynamisch ermittelte - Zeitspanne in der Vergangenheit liegt).
      In einer weiteren alternativen Ausprägung wird wie in den Schritten a) bis e) beschrieben vorgegangen. Allerdings filtert die Server-Proxy-Einrictung in Schritt b) aus einer Anfrage nach einer Basisdatei nicht die angegebene Bedingung heraus, leitet also eine bedingte Anfrage auch als solche an die Servereinrichtung weiter. Folglich analysiert die Server-Proxyeinrichtung in Schritt c) die erhaltene Antwort nur dann, wenn auch wirklich eine Datei von der Servereinrichtung geliefert wurde und nicht nur eine Statusinformation. Danach stellt die Server-Proxyeinrichtung für die gefundenen Unterdateien Anfragen (mit oder ohne Übernahme der Bedingung aus der Anfrage für die Basisdatei - wobei eine Übernahme der Bedingung potentiell bessere Ergebnisse erbringt) und fährt wie oben beschrieben weiter fort.
2. Personalisierte Webseiten (Cookies/Einloggen)
   (i) Immer mehr Webseiten im Internet versuchen die Identität der Anfragenden zu ermitteln. Der Grund für diese Ermittlung ist teilweise einfach nur, dass Profile über die einzelnen Nutzer erstellt werden sollen, dass die Anzahl der Nutzer gezählt werden sollen, oder aber dass wirklich persönliche/personalisierte Webseiten zurückgegeben werden sollen. Zu diesen "wirklich personalisierten" Webseiten zählen beispielsweise Webseiten über die ein Benutzer seine persönlichen eMails lesen und verwalten kann. Oder über die er an andere geschützte Informationen gelangt, die nur bestimmten Personen zugänglich sein sollen.
      Technisch realisiert wird das Abfragen dieser persönlichen Webseiten durch Ergänzungen in den Anfragen (GET). In der Regel weiß die Clienteinrichtung (z.B. der Web-Browser) dabei zunächst nicht, dass sie eine Anmeldung/persönliche Information in der Anfrage mitschicken soll. Daher stellt die Clienteinrichtung die Anfrage zunächst (beim ersten Zugriff) ohne die persönlichen Information in der Anfrage mitzuschicken. Die Servereinrichtung sendet dann oftmals zunächst eine Aufforderung zum Anmelden (zur Angabe der persönlichen Informationen in den Anfragen) zurück oder setzt beim ersten Zugriff innerhalb der Antwort (ergänzend zur gelieferten Datei) einen Wert zur persönlichen Identifikation dieses Nutzers und nachfolgender Zugriffe.
      Heute werden diese Nutzerinformationen im Internet überwiegend über sogenannte Cookies realisiert.
      Ein alternatives Verfahren ist beispielsweise eine normale HTTP-Authentifikation unter Verwendung eines Benutzernamens (username) und eines Passworts (password), die sich allerdings ähnlich eines Cookies behandeln läßt (und unter anderem einen teilweise fest definierte bzw. einen von dem die angefragte Basisdatei beschreibenden URL abhängigen Geltungsbereiche/Domänen/Pfade hat oder beispielsweise der "Wert" quasi durch ein Passwort ersetzt wird).
      Auch gibt es Verfahren wie die echten HTTP-Cookies, bei denen die Werte oftmals von der Servereinrichtung vorgegeben werden - während bei einer normalen HTTP-Authentifikation bzw. -Anmeldung die Servereinrichtung die Clienteinrichtung bzw. deren Benutzer auffordert, die entsprechenden Werte (wie username und password) einzugeben.
      Im folgenden werden daher die Begriffe Cookie und Cookie-Information auch als übergeordneter Begriff für diese alternativen Verfahren bzw. die bei diesem Verfahren ausgetauschten Informationen verwendet. Ein Cookie hat in diesem Zusammenhang einen Namen, einen Wert und einen Geltungsbereich. Der Geltungsbereich ist dabei in eine sogenannte Domäne und einen Pfad aufgeteilt. Die Domäne gibt an, für welche Rechner (oft gleichbedeutend mit Servereinrichtungen) dieser Cookie gelten soll. Eine Domäne "tellique.de" wird beispielsweise verwendet, wenn für alle Rechner unter tellique.de - also etwa www.tellique.de - der entsprechende Cookie mitgeliefert werden soll. Der Pfad gibt an, für welche Objekte (z.B. Webseiten) auf den entsprechenden Servereinrichtungen/Rechner dieser Cookie in Anfragen mitgeliefert werden soll. So kann der Cookie beispielsweise nur für alle Dateien einer Servereinrichtung gelten, deren Dateinamen mit "/privat" oder "/mail" anfangen.
      Eine Clienteinrichtung sendet dann für alle Anfragen nach Dateien die entsprechenden Cookies mit, wenn die entsprechenden Dateinamen (URLs) die Domäne und den Pfad eines Cookies enthalten. Die Servereinrichtung antwortet dann mit den entsprechenden personalisierten Datei-Inhalten oder zählt anhand der Cookie-Information einfach wie oft sich ein bestimmter Nutzer eine Webseite angesehen hat.
   (ii) Eine Server-Proxyeinrichtung muss für das Prefetching wissen, ob sie in die Anfragen nach Unterdateien eine Cookie-Information aufnehmen muss oder nicht. Dazu muss die Server-Proxyeinrichtung aber die Entscheidung treffen, für welche Anfragen nach Unterdateien sie welche Cookie-Informationen in die Anfragen an die Servereinrichtung aufnimmt. Den Namen und die Werte eines Cookies erfährt die Server-Proxyeinrichtung in der Regel aus den Anfragen nach der Basisdatei. Dort schreibt die Clienteinrichtung den Namen und den Wert der Cookies mit hinein, nicht jedoch die Domäne und den Pfad der Cookies.
      Die Domäne und den Pfad eines Cookies legt die Servereinrichtung fest (bzw. derjenige, der dort die Dateien erstellt/abgelegt hat). Wenn eine Clienteinrichtung eine Anfrage stellt, in der ein notwendiger Cookie nicht gesetzt ist, antwortet die Servereinrichtung zumeist zwar mit dem Dateiinhalt (oder einen leeren/besonderen Dateiinhalt), sendet aber ein SET-Cookie-Kommando mit, das den Cookie-Namen sowie dessen Wert, die Domäne und den Pfad enthält. Diese Information speichert die Clienteinrichtung und nutzt sie intern für die späteren Entscheidungen, bei welchen Anfragen sie diesen Cookie mitsendet. Eine Server-Proxyeinrichtung würde die Domäne, Pfad Informationen aber normalerweise nicht kennen.
      Der Begriff "Cookie" wird im folgenden generell benutzt - steht aber einfach für persönliche Information bei Anfrage einer personalisierten Webseite.
   (iii) Der Ablauf eines Ausführungsbeispiels ist daher wie folgt:
      a) Eine Clienteinrichtung stellt eine Anfrage nach der Basisdatei unter Angabe eines Cookies.
      b) Die Client-Proxyeinrichtung leitet die Anfrage inklusive Cookie an die Server-Proxyeinrichtung weiter.
      c) Die Server-Proxyeinrichtung stellt eine Anfrage inklusive Cookie an die Servereinrichtung.
      d) Die Servereinrichtung antwortet mit dem Inhalt der Basisdatei.
      e) Die Server-Proxyeinrichtung analysiert die erhaltene Basisdatei (rekursiv später Unterdateien) und ermittelt die Namen der enthaltenen Unterdateien.
      f) Die Server-Proxyeinrichtung trifft eine Annahme, ob bzw. welche Cookies in die Anfragen für jede einzelne Unterdatei mit aufgenommen werden sollen. Im einfachsten Fall (einfachstes Verfahren) übernimmt sie die für die Basisdatei-Anfrage gesetzten Cookie-Information in die Anfragen für die Unterdateien.
      g) Aus den Antworten ermittelt die Server-Proxyeinrichtung, ob sie eine korrekte Anfrage (inklusive der notwendigen Cookie-Informationen) gestellt hat. Das kann sie nicht unbedingt mit Sicherheit feststellen. Sofern sie aber glaubt, dass alle notwendigen Cookie-Informationen enthalten waren, leitet sie die erhaltene Unterdatei an die Client-Proxyeinrichtung weiter. Dabei leitet sie auch die Information darüber an den Client-Proxy weiter, wie bzw. mit welchen Cookies die Anfrage an die Servereinrichtung gestellt wurde - ggf. in voller oder verkürzter Form beispielsweise als Checksumme über die gestellte Anfrage bzw. die relevanten Teile der Anfrage.
      h) Die erhaltenen Unterdateien können rekursiv nach weiteren enthaltenen Unterdateien analysiert werden, für die dann entsprechend vorgegangen wird.
      i) Der Client-Proxy empfängt die Dateien und speichert sie für einige Zeit zwischen.
      j) Bei eingehenden Anfragen von der Clienteinrichtung prüft die Client-Proxyeinrichtung, ob sie eine entsprechende Datei bereits erhalten hat. Optional prüft die Client-Proxyeinrichtung weiterhin, ob die Anfrage, die sie jetzt von der Clienteinrichtung erhalten hat, in den relevanten Teilen mit der Anfrage übereinstimmt, die die Server-Proxyeinrichtung für die Anfrage nach dieser Unterdatei an die Servereinrichtung genutzt hatte (woraus sich ergibt, ob die richtigen Inhalte der Unterdatei von der Servereinrichtung geliefert und von der Server-Proxyeinrichtung an die Client-Proxyeinrichtung weitergegeben worden sind). Abhängig von der Prüfung gibt die Client-Proxyeinrichtung die vorher zwischengespeicherte Datei an die Clienteinrichtung weiter oder stellt eine passende neue Anfrage (mit der richtigen Cookie-Information) über die Server-Proxyeinrichtung an die Servereinrichtung.
      Die Annahme in Schritt f) kann beispielsweise sein:
      1) Für Anfragen nach einer Unterdatei sollen derselbe/dieselben Cookies genutzt werden, der/die in der Anfrage nach der Basisdatei enthalten war/waren.
      2) Für den Fall, dass die Server-Proxyeinrichtung als Antwort auf eine Anfrage nach einer Datei von der Servereinrichtung mitgeteilt wird, dass ein bestimmter Cookie gefehlt hat (SET-Cookie in der Antwort), verwendet diese Server-Proxyeinrichtung zunächst diesen zusätzlichen Cookie für Anfragen nach Unterdateien, die durch die Analyse dieser Datei gefunden wurden.
         Dabei kann die Server-Proxyeinrichtung die Anfrage nach der Datei noch einmal stellen, und zwar unter zusätzlicher Verwendung des im "SET-Cookie-Kommando" der Antwort erhaltenen Cookies. Für die gängige heutige Nutzung von Cookies im Internet sollte dies aber nicht erforderlich sein.
         Die Server-Proxyeinrichtung kann Annahmen über Domäne und Pfad für den Cookie treffen. Beispielsweise kann sie annehmen, dass der Pfad immer "/" ist (also alle Objekte der entsprechenden Servereinrichtung umfasst) und dass die Domäne ein Teil des DNS-Rechnernamens ist (beispielsweise die Domäne als "cnn.com" annehmen, wenn ein Cookie in einer Anfrage für einen URL auf der Servereinrichtung "www.cnn.com" enthalten ist).
      3) Die Server-Proxyeinrichtung kann sich pro Anfrage-Kette (d.h. die Anfragen nach einer Basisdatei inklusive der Unterdateien), pro Clienteinrichtung oder sogar Clienteinrichtung-übergreifend die Geltungsbereiche von Cookies (Name, ggf. Wert, Domäne, Pfad - oder zumindest einen Teil dieser Informationen) dauerhaft oder zeitweise merken (Caching) und so selbstständig entscheiden, ob sie beim Anfragen einer Unterdatei einen bestimmten Cookie mitsenden soll. Die Server-Proxyeinrichtung kann so auch entscheiden, ob es überhaupt sinnvoll ist, eine Unterdatei mit den vorhandenen (potentiell unzureichenden) Informationen anzufordern, wenn sie den Wert für diesen Cookie nicht kennt.
         Diese Informationen kann die Server-Proxyeinrichtung aus den Anfragen selbst (Cookie Name, Wert), aus Antworten der Servereinrichtung ("SET-Cookie" inklusive Domäne, Pfad) auslesen. Die Server-Proxyeinrichtung kann stattdessen oder zusätzlich versuchen die Domäne/Pfad korrekt allein aus den Anfragen zu erlernen - also zu speichern, für welche Rechner/Pfade dieser Cookie bisher von Browsern in Anfragen mitgeschickt wurde und so relativ gut eine Annahme für die Domäne/Pfad treffen.
         Es kann auch vorgesehen sein, einen Cache mit Cookie-Informationen wie Domäne, Pfad, Wert usw. statt in der Server-Proxyeinrichtung oder ergänzend zur Server-Proxyeinrichtung auch in der Client-Proxyeinrichtung zu bilden. Die Client-Proxyeinrichtung kann dann in ihren Anfragen an die Server-Proxyeinrichtung die notwendigen Informationen aus ihrem eigenen Cache innerhalb der Anfrage als Zusatzinformation für die Server-Proxyeinrichtung mitliefern.
      4) Kennt die Server-Proxyeinrichtung den Geltungsbereich eines Cookies nicht, kann sie eine Testabfrage für die betreffende(n) Unterdateien ganz ohne Angabe des Cookies an die Servereinrichtung senden, da die Servereinrichtung der Server-Proxyeinrichtung dann in der Antwort über ein "SET-Cookie"-Kommando u.a. Domäne und Pfad dieses Cookies mitteilt.
         Stellt die Server-Proxyeinrichtung dabei fest, dass für diese Anfrage einer/mehrere Cookies mitgesendet werden sollen, für die sie auch den Wert für den entsprechenden Nutzer kennt (aus dem eigenen Cache oder aus der Anfrage nach der Basisdatei), kann die Server-Proxyeinrichtung die Unterdatei noch einmal korrekt mit den richtigen Cookies anfordern.
         Alternativ kann die Server-Proxyeinrichtung auch eine sogenannte HTTP-HEAD-Anfrage als Testabfrage an die Servereinrichtung senden. In diesem Fall bekommt sie auch mitgeteilt, welche Cookies benötigt werden und welche Domänen/Pfade diese Cookies haben, die Servereinrichtung sendet aber als Antwort zunächst die eigentliche Datei noch nicht mit - wodurch das unnötig übertragene Datenvolumen reduziert wird.
      5) Es gibt Dateien (z.B.Web-Seiten), bei denen nicht auf eine Korrektheit der Cookie-Informationen geachtet werden muss. Im wesentlichen sind das im heutigen Internet lt. HTTP Standard Webseiten, für die Caching erlaubt ist. Ob für eine Datei Caching erlaubt ist, erkennen die beteiligten Einrichtungen aus der Antwort/Header von der Servereinrichtung. Daher kann eine Server-Proxyeinrichtung alternativ für Unterdateien einfach keine Cookie-Informationen in die Anfragen aufnehmen, die Antworten aber nutzen, wenn ein Caching erlaubt ist.
   (iv) Bei Schritt g) und j) können Server-Proxyeinrichtung und Client-Proxyeinrichtung beim Vergleichen beachten, dass es Dateien gibt, für die eine Korrektheit der in den Anfragen genutzten Cookie-Informationen nicht vorgeschrieben ist. Dies sind momentan Dateien, für die ein Caching für normale Web-Caches erlaubt wird. Daher können für solche Dateien in g) und j) in den Anfragen genutzte falsche Cookie-Informationen ignoriert werden.
      Es kann auch vorgesehen sein, dass das System in einen "Ignore-Modus" geschaltet wird, bei dem einfach "Cookie"-Mismatches (also zuviel/zuwenig in den Anfragen enthaltene Cookies) ignoriert werden. Solch ein Modus ist eine zweckmäßige Ausführung, da so auf "nicht-personalisierte" Webseiten effizienter zugegriffen werden kann.
      Hierbei kann der Modus durch den Benutzer und/oder die Client-Proxyeinrichtung und/oder die Server-Proxyeinrichtung und/oder eine Netzwerkmanagement-Komponente statisch vorgegeben oder dynamisch eingestellt werden. Auch können durch den Benutzer und/oder in der Clienteinrichtung und/oder in der Client-Proxyeinrichtung und/oder in der Server-Proxyeinrichtung Bereiche des Internets beschrieben werden, für die dieser "Ignore-Modus" genutzt werden kann (beispielsweise über Angabe von Listen ganzer oder teilweise aufgeführter URLs/Adressen von Servereinrichtungen, Domänennamen und/oder Dateinamen).
      Ergänzend zu j) und vorher g) kann vorgesehen sein, dass die Client-Proxyeinrichtung vergleicht, ob die von der Server-Proxyeinrichtung vorab erhaltenen Dateien den richtigen Parametern in der Anfrage (z.B. Cookies) von der Servereinrichtung angefragt wurden. Dies ist insbesondere für die "persönlichen -Webseiten"/Cookies sinnvoll - ist aber auch unabhängig davon vorteilhaft, da ein Teil der Anfrage den Typ der Clienteinrichtung benennen kann (optional). So kann eine Servereinrichtung ggf. andere Dateiinhalte liefern, je nachdem ob die Anfrage von einem Microsoft Internet Explorer, einem Netscape Browser oder noch einem anderen Web-Browser gestellt wurde.
      Da potentiell mehrere Endnutzer/Clienteinrichtungen dieselbe Client-Proxy-Einichtung nutzen, kann für diesen in Schritt j) eine Prüfung sinnvoll sein, ob die ihm vorliegenden Objekte nicht spezifisch für eine andere Clienteinrichtung zurückgeliefert wurden (z.B. eine andere Web-Browser-spezifische Formatierung der Web-Seiten verwenden).
3. Skript-Auswertung
   (i) Webseiten enthalten inzwischen sehr oft kleine Programme, die von der Clienteinrichtung (z.B. dem Web-Browser) ausgeführt werden, beziehungsweise nach Empfang durch die Clienteinrichtung extern auf dem gleichen PC ausgeführt werden. Diese Programme sind z.B. Java-Skripte, die als einzelne Dateien oder als Unter-Bestandteil einer Datei an die Clienteinrichtung gegeben werden.
   (ii) Diese Skripte enthalten oftmals Befehle zum Laden zusätzlicher Dateien/Objekte durch die Clienteinrichtung. Beispielsweise enthalten sie Angaben, dass zusätzliche Bilder (=Unterdateien) geladen und angezeigt werden sollen. Es ist aber nur sehr schwer/kaum möglich, diese Skripte im Server-Proxy wirklich auszuführen, u.a. da dies potentiell zu einer hohen CPU-Last führt, Interpretationsmöglichkeiten für die verschiedenen Skript/Programm-Sprachen voraussetzt, oftmals bestimmte Rechte oder Systemumgebungen voraussetzt und das Risiko von Schäden oder Beeinträchtigungen der Server-Proxyeinrichtung durch bösartiger Skripte besteht.
   (iii) Die Skripte werden von der Server-Proxyeinrichtung analysiert und enthaltenen Verweise auf Unterdateien werden "erraten". Eine solche Analyse umfasst beispielsweise das Durchgehen des Skript/Programm-Textes unter der Vermutung, dass Textteile, die mit "http://" anfangen, die in der Form "a.b.c" vorliegen (wie www.cnn.com) -- also wie ein DNS-Rechnername beginnen -- oder die auf eine bestimmte Endung (beispielsweise ".gif, ".htm", ".html" oder ".jpg") enden, jeweils ein Verweis auf Unterdateien sind.
      Die Server-Proxyeinrichtung kann dabei die erratenen Dateinamen noch ergänzen. Beispielsweise die Rechneradresse/Pfad des gerade analysierten Skriptes dem ermittelten Namen der Unterdatei voranstellen.
      Die Server-Proxyeinrichtung versucht anschließend diese Unterdateien von den entsprechenden Servereinrichtungen anzufordern. Erhält sie auf die Anfragen eine korrekte Datei zugeschickt, leitet sie diese an die Client-Proxyeinrichtung weiter. Erhält sie eine Fehlermeldung, kann sie als Optimierung des Verfahrens annehmen, dass sie einen falschen Dateinamen gerade hat und leitet nichts an die Client-Proxyeinrichtung weiter. Alternativ kann die Server-Proxyeinrichtung versuchen, das Skript auszuführen. Dies kann entweder durch direkte interne Unterstützung der Skript-Sprache erfolgen oder extern zur eigentlichen Server-Proxyeinrichtung beispielsweise durch eine Browser-Einrichtung, der das Skript zur Ausführung übergeben wird.
      Der Server-Proxyeinrichtung wird anschließend durch geeignete Maßnahmen mitgeteilt, welche zusätzlichen Dateien die externe Anwendung (Browser) beim Ausführen des Skripts angefordert hat. Dies ist beispielsweise möglich, indem alle Dateianfragen der externen Anwendung zunächst durch ein potentiell innerhalb der Server-Proxyeinrichtung implementiertes Analyse-Werkzeug geleitet werden. (Beispielsweise wird hierfür in den extern gestarteten Browser eine entsprechende Proxyeinrichtung - z.B. die Server-Proxyeinrichtung selbst - einstellt, so dass die Anfragen für Unterdateien nicht direkt an die Servereinrichtung gesendet werden.)
   (iv) Da durch die Analyse/das Raten der Unterdateinamen durchaus falsche Dateinamen erraten werden können - und/oder auch Dateien, die nicht sofort benötigt werden, sondern erst beispielsweise nachdem eine Aufforderung durch den Benutzer erfolgte (Klicken auf Link...) -, kann eingestellt werden, dass nur Unterdateien bis zu einer bestimmten Größe angefordert werden, damit das Risiko für unnötig übertragenen Daten begrenzt wird.
      Als weitere Erweiterung kann implementiert werden, dass auch große "erratene" Dateien/Dateinamen übertragen werden, die Übertragung aber abgebrochen wird, wenn nicht eine explizite Anfrage von der Clienteinrichtung empfangen wurde. In diesem Fall wird auch für sehr große Dateien zunächst die Übertragung begonnen, sie aber ggf. nach einer voreinstellbaren Zeit abgebrochen, wenn keine entsprechende Anfrage erhalten wurde.
4. Komprimierte Objekte
   (i)/(ii) Ein Verfahren bzw. eine Server-Proxyeinrichtung nach DE 100 39 901 A1 müsste zum Analysieren von Dateien nach Unterdateien die Dateien dekomprimieren, wenn sie von der Servereinrichtung in komprimierter Form übertragen werden. Clienteinrichtungen können Servereinrichtungen erlauben, ihnen die Objekte/Dateien komprimiert zuzusenden.
   (iii) Zwei Lösungsansätze sind möglich, die einzeln oder in Kombination eingesetzt werden können:
      1) Die Server-Proxyeinrichtung (und/oder die Client-Proxyeinrichtung) wandelt die Anfragen so um, dass die Antworten nicht mehr komprimiert geliefert werden können/dürfen. (Derzeit ist im HTTP-Protokoll eine Angabe in einem Header-Feld einer GET-Anfrage vorgesehen, die das Übergeben komprimierten Dateien von der Servereinrichtung erlaubt. Diese Erlaubnis lässt sich mit geringem Aufwand herausfiltern.)
      2) Die Server-Proxyeinrichtung dekomprimiert die Dateien zur Analyse auf Unterdateien und leitet dann entweder die unkomprimierten Dateien oder (besser) die noch/wieder komprimierten Dateien an die Client-Proxyeinrichtung weiter.
5. Unerlaubtes und erlaubtes Caching im Client-Proxy
   (i) Es gibt Dateien/Objekte, für die keinerlei Caching erlaubt ist. Üblicherweise wird die Information, ob Caching erlaubt ist oder nicht, von der Servereinrichtung nach einer Anfrage im Header zu der Antwort (zusammen mit der Datei) mitgeliefert.
   (ii) Die Client-Proxyeinrichtung muss die "unaufgefordert" von der Server-Proxyeinrichtung an sie übermittelten Dateien kurzzeitig zwischenspeichern (Caching) - da sie sonst nicht darauf warten könnte, eine entsprechende Anfrage von der Clienteinrichtung zu erhalten, die zu der von der Server-Proxyeinrichtung unaufgefordert gesendeten Datei passt. Darüber hinaus ist es sinnvoll, Dateien, für die eigentlich kein Caching erlaubt ist, dennoch kurzzeitig zwischenzuspeichern, da sie von einigen Clienteinrichtungen mehrfach angefordert werden, z.B. wenn sie mehrfach auf derselben Webseite vorkommen. Beispiele hierfür sind u.a. kleine Bilder.
      Es aber das Problem bestehen, dass einer Clienteinrichtung durch das Zwischenspeichern von eigentlich nicht für Caching zugelassenen Dateien - deren Datei-Inhalte beispielsweise sehr schnell wechseln - trotz einer Neuanforderung von der Client-Proxyeinrichtung eine veraltete Version übergeben wird.
   (iii) Es wird vorgeschlagen:
      1) In der Grundversion speichert eine Client-Proxyeinrichtung auch die eigentlich nicht zum Caching zugelassene Objekte zwischen, um die von der Server-Proxyeinrichtung empfangenen Dateien zur Beantwortung der kurze Zeit später von der Clienteinrichtung eingehenden Anfragen zu nutzen. Diese Zwischenspeicherung erfolgt aber nur kurzzeitig.
   (iv)
      2) Ergänzend kann sich eine Client-Proxyeinrichtung nach 1) darauf beschränken, ein eigentlich nicht zum Caching zuglassenes Objekt maximal ein Mal an eine Clienteinrichtung weiterzugeben (und dadurch das Risiko eines Weitergebens einer alten Version für eine neue Anfrage reduzieren).
      3) Es kann vorteilhaft sein, dass die Client-Proxyeinrichtung nach nach 1) und 2) eine zwischengespeicherte Datei auch mehrfach an die Clienteinrichtung weitergibt, für den Fall, dass diese Datei kontinuierlich (beispielsweise mindestens ein Mal pro 200 MilliSekunden) immer wieder angefragt wird, da es sich dann potentiell um mehrfache Abfrage handelt, nur weil diese Datei/Objekt mehrfach in einer Webseite vorkommt. Das entsprechende Zeitintervall kann fest und/oder dynamisch, manuell und/oder automatisch, durch Benutzer und/oder einen Betreiber und/oder ein Netzwerkmanagement einstellbar sein.
      4) Eine Client-Proxyeinrichtung kann Dateien, für die ein Caching zugelassen ist, für längere Zeit zwischenspeichern, um so das Anfrage- und Antwort-Datenvolumen zu reduzieren und die Objekte schnell lokal bereitzustellen.
      5) Eine Server-Proxyeinrichtung kann Informationen von einer Client-Proxyeinrichtung bekommen, die anzeigen, welche Dateien noch in der Client-Proxyeinrichtung zwischengespeichert sind. Die Server-Proxyeinrichtung kann diese Informationen nutzen, um das Anfragen/Weiterleiten von Unterdateien zu unterdrücken, solange diese noch im Cache der Client-Proxyeinrichtung vorliegen - unabhängig davon, ob für diese Dateien nun eigentlich Caching zugelassen ist oder nicht.
      6) Ergänzend zu 5) kann eine Server-Proxyeinrichtung anstelle der und/oder zusätzlich zu den von der Client-Proxyeinrichtung gelieferten Informationn über zwischengespeicherte Dateien selbst errechnen, welche Dateien / Objekte sich noch im Cache der Client-Proxyeinrichtung befinden (z.B. durch Kenntnis der Algorithmen in der Client-Proxyeinrichtung und der gewählten Parameter) und damit ermitteln, ob eine bestimmte Datei noch zwischengespeichert sein müsste (und deshalb nicht übertragen werden muss).
6. Langsam/später eingehende Unterdateien
   (i) Viele Servereinrichtungen sind langsam - oftmals sind die Netzverbindungen zu den Servereinrichtungen langsam, oder es wird einfach nach relativ großen Dateien gefragt -, so dass die Übertragung dieser Dateien entweder von der Servereinrichtung zur Server-Proxyeinrichtung und/oder von der Server-Proxyeinrichtung zur Client-Proxyeinrichtung lange dauert.
   (ii) Es soll mit dem Analysieren der Basisdatei/Unterdateien angefangen werden, sobald diese stückweise in der Server-Proxyeinrichtung eintrifft, damit möglichst schnell mit dem Anfordern der Unterdateien begonnen werden kann. Es kommt oft vor, dass die Clienteinrichtung bereits eine Anfrage nach einer Unterdatei stellt, während diese erst teilweise bei der Client-Proxyeinrichtung eingetroffen ist. Es kommt oft vor, dass die Clienteinrichtung bereits eine Anfrage nach einer Unterdatei stellt, bevor überhaupt etwas von dieser Unterdatei bei der Client-Proxyeinrichtung eingetroffen ist.
   (iii) Eine Client-Proxyeinrichtung beginnt die Beantwortung einer eingehende Anfrage einer Clienteinrichtung mit gerade erst eingehenden ersten Daten einer Unterdatei und ergänzt die Antwort mit den nachfolgend eingehenden Daten dieser Unterdatei, wobei sich die folgende Vorgehensweisen ergeben können:
      1. Eine Client-Proxyeinrichtung, die zu einer von der Clienteinrichtung eingegangene Anfrage zunächst keine passende vorhandene oder von der Server-Proxyeinrichtung eingehenden Unterdatei finden kann, leitet daher die Anfrage zunächst an die Server-Proxyeinrichtung weiter. Die Client-Proxyeinrichtung bricht diese Anfrage aber ab, wenn parallel diese Unterdatei von der Server-Proxyeinrichtung eintrifft. (Dies ist beispielsweise der Fall, wenn sich das Aussenden der Datei durch die Server-Proxyeinrichtung und der Anfrage durch die Client-Proxyeinrichtung im Netz z.B. mit hoher Übertragungszeit überschneiden).
      2. Weiterhin kann vorgesehen sein, dass die Server-Proxyeinrichtung, wenn sie das Verhalten einer Client-Proxyeinrichtung nach 1. versteht, nachfolgend die somit unnütz übertragene Anfrage ignoriert.
      3. Es kann vorgesehen sein, dass eine Server-Proxy-Einrichtng, die eine Anfrage von einer Client-Proxyeinrichtung erhält, erkennt, dass die Anfrage für dieselbe Datei (potentiell zusätzlich geprüft mit denselben Anfrage-Parametern für die gleiche Client-Proxyeinrichtung) bereits zu einer Anfrage an die Servereinrichtung gerührt hat, für die die Server-Proxyeinrichtung aber noch keine oder nur wenige Daten erhalten hat. In diesem Fall kann die Server-Proxyeinrichtung diese Anfrage der Client-Proxyeinrichtung der bereits gestellten Anfrage zuordnen und die für die bereits gestellte Anfrage als Antwort empfangenen Daten an die Client-Proxyeinrichtung weiterleiten.
7. Priorisierung der zu versendenden Objekte
   (i) Die Server-Proxyeinrichtung leitet sowohl die direkt von dem/den Client-Proxyeinrichtung(en) angefragten Basisdateien als auch die über Prefetching erhaltenen Unterdateien an den/die Client-Proxyeinrichtung(en) weiter. Dabei konkurrieren potentiell die weiterzuleitenden Dateien (Basisdateien und Unterdateien) gemeinsam um die zwischen der Server-Proxyeinrichtung und der/den Client-Proxyeinrichtung(en) zur Verfügung stehenden Netzbandbreite. Dies gilt sowohl, wenn nur eine Client-Proxyeinrichtung und eine Server-Proxyeinrichtung einzeln betrachtet wird, als auch, wenn eine Server-Proxyeinrichtung Daten mit mehreren Client-Proxyeinrichtungen austauscht - zumal unter Umständen zum Datenaustausch mit den Client-Proxyeinrichtungen nur eine gemeinsam für alle Client-Proxy-Einrichrichtungen genutzte Netzbandbreite zur Verfügung steht.
   (ii) Die eigentliche Clienteinrichtung kann oftmals davon profitieren, wenn sie möglichst schnell die eigentlich angefragte Basisdatei erhält. Bei vielen Webseiten in Verbindung mit einigen Web-Browsers führt dies dazu, dass diese Objekte bzw. der generelle Seitenaufbau schon einmal angezeigt wird. In diesem Fall ist die Webseite zwar in der Regel noch nicht vollständig (es fehlen gegebenenfalls Texte, Bilder, ...) aber der Benutzer kann oftmals schon mit dem Ansehen der Webseite zumindest teilweise beginnen.
   (iii) Die Server-Proxyeinrichtung priorisiert beim Weiterleiten der erhaltenen Basisdatei beziehungsweise der Unterdateien an die Client-Proxyeinrichtung(en) und gibt dabei den Basisdateien in der einen oder anderen Form eine höhere Priorität.
   (iv) Als eine Alternative kann die Server-Proxyeinrichtung Basisdateien priorisieren, indem sie, solange Basisdateien anstehen, diese zuerst sendet. Alternativ kann die Server-Proxyeinrichtung auch einen relativ oder auch absolut höheren Bandbreitenanteil für die Übertragung von Basisdateien nutzen, wenn diese denn zur Übertragung anstehen - die Übertragung von Unterdateien dabei also nicht gänzlich stoppen beziehungsweise pausieren.
8. Server-Proxyeinrichtung nutzt spezielle IP-Adresse(n)
   (i) Die Server-Proxyeinrichtung tauscht Anfragen und Daten mit den Servereinrichtungen aus. Initiiert (durch die eigentliche Anfrage) wird dieser Datenaustausch durch die Clienteinrichtung bzw. weitergeleitet durch die Client-Proxyeinrichtung. Dabei liegt die Server-Proxyeinrichtung aber zwischen der eigentlichen Servereinrichtung und der Client-Proxyeinrichtung bzw. der Clienteinrichtung.
      Je nach konkreter technischer Realisierung könnte es sein, dass die Server-Proxyeinrichtung zur Kommunikation mit der Servereinrichtung ihre eigene Netzadresse (beispielsweise ihre eigene IP- (= Internet Protocol) Adresse benutzt. In diesem Fall wäre in der Regel insbesondere für Netzkomponenten zwischen der Server-Proxyeinrichtung und der Servereinrichtung nicht mit Standardverfahren erkennbar, welche Client-Proxyeinrichtung bzw. sogar welche Clienteinrichtung diesen Datenaustausch veranlasst hat. Teilweise (je nach höheren genutzten Protokollen oberhalb der Netzebene/IP) wäre dies auch für die eigentliche Servereinrichtung nicht erkennbar.
   (ii) Für das Netz und/oder Netzkomponenten zwischen der Server-Proxyeinrichtung und der Servereinrichtung und potentiell auch der Servereinrichtung selbst, soll anhand der für den Datenaustausch genutzten Netzadressen (z.B. IP-Adressen) erkennbar sein, welche Client-Proxyeinrichtung beziehungsweise optional welche Clienteinrichtung den Datenaustausch veranlasst hat beziehungsweise an diesem beteiligt ist. Dies kann aus verschiedenen Gründen vorteilhaft sein, unter anderem (nur beispielhaft aufgeführt) weil Netzbetreiber oder Dienstbetreiber Nutzungsstatistiken führen; weil zwischen der Server-Proxyeinrichtung und der Servereinrichtung Komponenten eingesetzt werden sollen, die Durchsatzbeschränkungen für einzelne Clienteinrichtungen oder Gruppen von Clienteinrichtungen ermöglichen sollen; weil Auskunft darüber möglich sein soll oder sogar muss, welche Clienteinrichtung beziehungsweise sogar welcher Nutzer einen bestimmten Datenaustausch initiiert hat.
   (iii) Zunächst werden zum besseren Verständnis des Erfindungsaspekts noch einige Informationen zum technischen Hintergrund erläutert. Netzkomponenten (wie beispielsweise Rechner und somit potentiell auch die Clienteinrichtung und/oder Client-Proxyeinrichtung) verfügen über eine eigene Netzadresse. Diese Adresse wird üblicherweise als Netzadresse der Ebene 3 des ISO/OSI-Referenzmodells bezeichnet (beispielsweise eine IP-Adresse).
      Auf einem Rechner nutzen aber ganz unterschiedliche Anwendungen teilweise sehr viele parallele Verbindungen zum Datenaustausch. Diese Verbindungen werden oftmals auf der Ebene der Transportschicht, also der Ebene 4 des ISO/OSI-Referenzmodells, unterschieden (potentiell auch beziehungsweise nur auf noch höheren Ebenen des ISO/OSI-Referenzmodells).
      Im folgenden beschreiben wir den Ablauf beispielhaft anhand des heute überwiegend eingesetzt TCP-Protokolls (Transmission Control Protocol), das der Transportschicht, also der Ebene 4 des ISO/OSI-Referenzmodells zuzuordnen ist. Gleichwohl kann man das Beschriebene auch auf andere Protokolle abbilden.
      TCP erlaubt es einem Rechner (der beispielsweise nur eine einzige Netzadresse / IP-Adresse hat) sehr viele parallele Verbindungen zum Datenaustausch zu unterscheiden, und TCP kann diese zudem den richtigen Anwendungen zuordnen. Hierzu nutzt TCP eine weitere Adressierung (sogenannte Portnummer / Ports). Wichtig ist dabei, dass die Kombination der Ports für zwei betrachtete Rechner eindeutig ist. Also nicht zwei eigentlich verschiedene Verbindungen zum Datenaustausch zwischen zwei Rechnern auf beiden Seiten dieselben Portnummern benutzen.
      Für die obenstehend beschriebene Aufgabe aus dem Abschnitt (ii) muss zunächst realisiert werden, dass die Server-Proxyeinrichtung zur Kommunikation mit beispielsweise der Servereinrichtung eine Netzadresse / IP-Adresse der Clienteinrichtung oder der Client-Proxyeinrichtung nutzt. Dies darf die Server-Proxyeinrichtung aber nur tun, wenn sie zugleich sicherstellen kann, dass sie dabei eine Portnummer verwendet, die nicht mit anderen von der Clienteinrichtung oder Client-Proxyeinrichtung genutzten Verbindungen zum Datenaustausch kollidiert.
      Dies ist für die Anfragen nach Basisdateien relativ einfach zu lösen. Bei diesen Anfragen baut (abhängig von der konkreter Realisierung, aber üblicherweise) die Clienteinrichtung eine TCP-Verbindung zur Client-Proxyeinrichtung auf. Die Client-Proxyeinrichtung kann nun beispielsweise (als eine von mehreren denkbaren Vorgehensweisen) die IP-Adresse und die TCP-Portnummer dieser von der Clienteinrichtung erhaltenen TCP-Verbindung als Information an die Server-Proxyeinrichtung weitergeben. Die Server-Proxyeinrichtung kann dann für ihre eigene Anfrage anstelle ihrer IP-Adresse die IP-Adresse der Clienteinrichtung und diese TCP-Portnummer der Clienteinrichtung nutzen.
      Wesentlich komplizierter ist das Vorgehen für die von der Server-Proxyeinrichtung durch das Prefetching ausgeführten zusätzlichen Anfragen nach Unterdateien "Prefetching-Verbindungen". Für diese Prefetching-Verbindungen gibt es zunächst keine TCP-Verbindung der Clienteinrichtung, so dass hier nicht eine TCP-Portnummer der Clienteinrichtung weiter verwendet werden kann.
      Es wird nun das folgende Verfahren, einschließlich alternativer Fortbildungen, vorgeschlagen:
      a) Auf der Clienteinrichtung werden Portnummern reserviert (die also von TCP nicht für beliebige andere Verbindungen genutzt werden können). Eine Information über diese vorab oder dynamisch reservierten Portnummern wird auf der Server-Proxyeinrichtung konfiguriert und/oder dynamisch an diese übermittelt. Für Prefetching-Verbindungen kann dann die Server-Proxyeinrichtung eine dieser Portnummern nutzen.
      b) Es wird der gleiche Ansatz verfolgt wie in a), aber die Reservierung der Portnummern erfolgt auf der Client-Proxyeinrichtung.
      c) Für jede Clienteinrichtung bzw. Client-Proxyeinrichtung oder auch für jeweils eine Gruppe an Clienteinrichtungen und/oder Client-Proxyeinrichtungen werden zusätzliche Netzadressen/IP-Adressen genutzt. Diese können auf der Server-Proxyeinrichtung konfiguriert werden, oder sie werden auf der Client-Einrichung und/oder Client-Proxyeinrichtung festgelegt und an die Server-Proxyeinrichtung übermittelt. Die Server-Proxyeinrichtung kann dann für Prefetching-Verbindungen die entsprechende dieser Netzadressen/IP-Adressen nutzen und beliebige oder auch hier reservierte Portnummern für diese "Ersatz"-IP-Adressen.
      d) Die Server-Proxyeinrichtung kann zunächst die Anfrage nach der Basisdatei abschließen und danach die IP-Adresse und Portnummer, die die Clienteinrichtung für die TCP Verbindung zur Abfrage der Basisdatei genutzt hat, für einige (möglichst kurze) Zeit für die Anfragen nach Unterdateien verwenden. Dies geht jedoch nur eingeschränkt, da zumindest ohne weitere Vorkehrungen die eigentliche Clienteinrichtung diese Portnummern zumindest nach einiger Zeit erneut benutzen könnte.

Es wird darauf hingewiesen, dass das Vorab-Übersenden von Dateien bei den beschriebene Verfahren einerseits durch individuelles Übertragen der einzelnen Dateien (wie es im Grundschema in Figur 4 dargestellt ist) erfolgen kann. Darüber hinaus sind jedoch andere Übertragungsformen möglich und sinnvoll: so kann nach dem Analysieren einer Basisdatei und/oder ihrer Unterdateien zunächst eine Indexdatei (eine Indexseite, ein Inhaltsverzeichnis o.ä) erstellt und von der Server-Proxyeinrichtung an die Client-Proxyeinrichtung übertragen werden, die Informationen über alle oder einige der von der Server-Proxyeinrichtung gefundenen Unterdateien/Objekte enthält, so dass beispielsweise die Client-Proxyeinrichtung bereits weiß, welche Dateien in Kürze vorab übermittelt werden. Alternativ oder ergänzend kann vorgesehen sein, die Dateien nicht einzeln, sondern als ein oder mehrere Bündel zu übertragen, wobei die Gruppierung der Dateien zu Bündeln verschiedenen Regeln (beispielsweise Dateigröße, Gesamtgröße, Priorisierung, enthaltene Unterdateien, Basisdateien usw.) folgen kann. Die Reihenfolge der Übertragung einzelner Dateien oder von Dateigruppen oder deren relative oder absolute Priorisierung (etwa anteilige Bandbreite für Dateien oder Dateibündel) kann u.a. entsprechend der Anforderungen der Clienteinrichtung und/oder der Client-Proxyeinrichtung und/oder der Servereinrichtung und/oder der übertragenen Inhalte geschehen. Auch können die Dateien einzeln oder gruppiert komprimiert und/oder verschlüsselt übertragen werden. Weitere Varianten sind vorstellbar.

Es sei ferner darauf hingewiesen, dass das Netz mit großer Übertragungszeit stellvertretend für ein beliebiges Netz stehen kann, also ein DSL-, Mobilfunk-, Rundfunk-, Satelliten-, drahtloses lokales oder ein beliebiges IP-Netz umfassen kann. Die effizienzsteigernde Wirkung der vorliegenden Erfindung beim Zugriff auf strukturierte Datenmengen ist in jedem Fall gegeben. Sie ist umso größer, je stärker die Einschränkungen eines Netzes sind, z.B. durch große Übertragungszeit, geringe Bandbreite, hohe Fehleranfälligkeit usw.

Es wird darauf hingewiesen, daß die hier beschriebenen Verfahren auch dann vorteilhaft verwendbar sind, wenn die beschriebene Client-Proxyeinrichtung und die beschriebene Server-Proxyeinrichtung nicht durch ein Übertragungsnetz getrennt sind. Es ist sogar möglich, die Client-Proxyeinrichtung und die Server-Proxyeinrichtung vollständig zusammenzulegen und dennoch eine wesentlich schnellere Übertragung der Informationen zwischen der Clienteinrichtung und der Servereinrichtung zu erreichen. Hierbei könnte die zusammengelegte Client-Proxyeinrichtung und Server-Proxyeinrichtung (aus Sicht des Netzes) sowohl eher näher an der Clienteinrichtung als auch eher näher an der Servereinrichtung ausgeführt werden.

Es kann auch vorgesehen sein, zwischen einzelnen Komponenten, insbesondere zwischen der Clienteinrichtung und der Client-Proxyeinrichtung sowie zwischen der Server-Proxyeinrichtung und der Servereinrichtung weitere Komponenten in den Übertragungspfad zwischenzuschalten. Diese weiteren Komponenten können beispielsweise Caching-Proxies (Web-Caches) oder sogenannte Forwarding-Proxies (wie beispielsweise Firewalls) sein, die heute im Internet breite Anwendung finden. Diese Komponenten können teilweise explizit in dem Übertragungspfad konfiguriert sein (beispielsweise durch die explizite Konfiguration eines zwischen der Server-Proxyeinrichtung und der Servereinrichtung gelegenen Caching-Proxies in der Server-Proxyeinrichtung), zum Teil ist aber auch keine explizite Konfiguration erfordern (wie beispielsweise bei sogenannten transparenten Web-Caches).

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Übertragen von Daten in einem System mit serverseitigen Einrichtungen, die eine Servereinrichtung und eine Server-Proxyeinrichtung umfassen, und clientseitigen Einrichtungen, die eine Clienteinrichtung und eine Client-Proxyeinrichtung umfassen, wobei bei dem Verfahren:
- von einer anfragenden der clientseitigen Einrichtungen eine Anfrage nach einer über die Servereinrichtung in dem System abrufbaren Basisdatei einer strukturierten Datenmenge erzeugt wird;
- von der anfragenden oder von einer anderen der clientseitigen Einrichtungen die Anfrage nach der Basisdatei an die Server-Proxyeinrichtung übertragen wird;
- die Anfrage nach der Basisdatei zusammen mit einer die anfragende clientseitige Einrichtung identifizierenden Adreßinformation von der Server-Proxyeinrichtung an die Servereinrichtung übertragen wird;
- in der Servereinrichtung die Anfrage nach der Basisdatei sowie die die anfragende clientseitige Einrichtung identifizierende Adreßinformation empfangen werden und die Anfrage analysiert wird;
- die Basisdatei von der Servereinrichtung an die Server-Proxyeinrichtung übertragen wird;
- die Basisdatei von der Server-Proxyeinrichtung analysiert wird, um elektronische Informationen über eine Unterdatei der Basisdatei zu ermitteln;
- eine Anfrage nach der Unterdatei zusammen mit der einen oder einer anderen die anfragende clientseitige Einrichtung identifizierenden Adreßinformation von der Server-Proxyeinrichtung an die Servereinrichtung übertragen wird, wenn beim Analysieren der Basisdatei elektronische Informationen über die Unterdatei ermittelt werden;
- in der Servereinrichtung die Anfrage nach der Unterdatei sowie die eine/andere Adreßinformation, welche die anfragende clientseitige Einrichtung identifiziert, empfangen werden;
- die Unterdatei von der Servereinrichtung an die Server-Proxyeinrichtung übertragen wird; und
- eine Antwortdatenmenge, welche die Basisdatei und die Unterdatei umfasst, von der Server-Proxyeinrichtung an die Client-Proxyeinrichtung übertragen werden.

2. Verfahren nach Anspruch 1, **dadurch gekennzeichnet, dass** die die anfragende clientseitige Einrichtung identifizierende Adreßinformation die Netzadresse der Clienteinrichtung und/oder die Netzadresse der Client-Proxy-Einrichtung umfasst.

3. Verfahren nach Anspruch 1, **dadurch gekennzeichnet, dass** die die anfragende clientseitige Einrichtung identifizierende Adreßinformation bedarfsabhängig in dem System erzeugt und konfiguriert wird.

4. Verfahren nach Anspruch 1, **dadurch gekennzeichnet, dass** die die anfragende clientseitige Einrichtung identifizierende Adreßinformation eine Portnummer umfasst.

5. Verfahren nach Anspruch 1, **dadurch gekennzeichnet, dass** die die anfragende clientseitige Einrichtung identifizierende Adreßinformation eine ergänzende Netzwerkadresse in dem System umfasst.

6. Verfahren nach Anspruch 1, **dadurch gekennzeichnet, dass** die die anfragende clientseitige Einrichtung identifizierende Adreßinformation in den clientseitigen Einrichtungen erzeugt und konfiguriert wird.

7. Verfahren nach Anspruch 1, **dadurch gekennzeichnet, dass** die die anfragende clientseitige Einrichtung identifizierende Adreßinformation in den serverseitigen Einrichtungen erzeugt und konfiguriert wird.

8. Verfahren nach Anspruch 1, **dadurch gekennzeichnet, dass** die eine oder die andere Proxyeinrichtung Skript-Informationen in der Basisdatei und/oder der Unterdatei auswertet.

9. Verfahren nach Anspruch 1, **dadurch gekennzeichnet, dass** die Anwortdatenmenge komprimierte Daten umfasst und dass die eine oder die andere Proxyeinrichtung die komprimierten Daten dekomprimiert.

10. Verfahren nach Anspruch 1, **dadurch gekennzeichnet, dass** die Anfrage nach der Basisdatei modifiziert wird, dass die Antwortdatenmenge keine komprimierten Daten umfassen kann.

11. Verfahren nach Anspruch 1, **dadurch gekennzeichnet, dass** die eine oder die andere Proxyeinrichtung Daten aus der Antwortdatenmenge zwischenspeichert, die für Zwischenspeicherung nicht vorgesehen sind.

12. Verfahren nach Anspruch 11, **dadurch gekennzeichnet, dass** die zwischengespeicherte Antwortdatenmenge nur zur Beantwortung einer begrenzten Anzahl weiterer Anfragen durch dieselbe Clienteinrichtung verwendet wird.

13. Verfahren nach Anspruch 11, **dadurch gekennzeichnet, dass** die zwischengespeicherte Antwortdatenmenge nur zur Beantwortung einer begrenzten Anzahl weiterer Anfragen durch dieselbe Clienteinrichtung verwendet wird und dass die obere Grenze für die begrenzte Anzahl weiterer Anfragen 1 ist.

14. Verfahren nach Anspruch 11, **dadurch gekennzeichnet, dass** die zwischengespeicherte Antwortdatenmenge nur so lange zwischengespeichert wird, wie sie jeweils innerhalb eines Zeitintervalls von der Clienteinrichtung, erstmalig oder erneut, angefragt wird.

15. Verfahren nach Anspruch 1, **dadurch gekennzeichnet, dass** die Client-Proxyeinrichtung an die Server-Proxyeinrichtung Speicherinformation übermittelt, die anzeigt, welche Basisdatei(en) und/oder Unterdatei(en) noch zwischengespeichert sind, und dass die Server-Proxyeinrichtung die erhaltene Speicherinformation auswertet, um elektronische Anfragen nach der noch zwischengespeicherten Basisdatei/Unterdatei zu unterdrücken und/oder ein Weiterleiten von der Server-Proxyeinrichtung der noch zwischengespeicherten Basisdatei/Unterdatei zu verhindern.

16. Verfahren nach Anspruch 1, **dadurch gekennzeichnet, dass** die Anfrage nach Unterdateien der Basisdatei von der Client-Proxyeinrichtung erzeugt und an die Servereinrichtung übermittelt wird und dass die Client-Proxyeinrichtung die Übermittlung der Anfrage nach einer der Unterdateien abbricht, wenn die Client-Proxyeinrichtung zumindest Teile der einen Unterdatei empfängt.

17. Verfahren nach Anspruch 1, **dadurch gekennzeichnet, dass** die Server-Proxyeinrichtung eine Priorisierung für die Weiterleitung ausführt, in dem die Basisdatei bevorzugt weitergeleitet wird.

18. Verfahren nach Anspruch 17, **dadurch gekennzeichnet, dass** zur bevorzugten Weiterleitung der Basisdatei ein hierfür genutzter Übertragungsbandbreite-Anteil vergrößert wird.

19. Verfahren zum Übertragen von Daten in einem System mit einer Servereinrichtung und einer Clienteinrichtung, die über mehrere Proxyeinrichtungen, welche eine Server-Proxyeinrichtung und eine Client-Proxyeinrichtung umfassen, verbunden sind, wobei bei dem Verfahren:
- von der Clienteinrichtung eine bedingte Anfrage nach einer über die Servereinrichtung in dem System abrufbaren Basisdatei einer strukturierten Datenmenge erzeugt und an eine der mehreren Proxyeinrichtungen übertragen wird, wobei die bedingte Anfrage eine Bedingung umfaßt;
- aus der bedingten Anfrage in der einen Proxyeinrichtung eine modifizierte Anfrage nach der Basisdatei abgeleitet wird, indem die Bedingung geändert wird;
- die modifizierte Anfrage nach der Basisdatei von der einen Proxyeinrichtung an die Servereinrichtung übertragen wird;
- in der Servereinrichtung die modifizierte Anfrage nach der Basisdatei empfangen und analysiert wird;
- eine Antwortdatenmenge, welche die Basisdatei umfaßt, von der Servereinrichtung an die eine oder eine andere der mehreren Proxyeinrichtungen übertragen wird;
- die Antwortdatenmenge von der einen oder der anderen Proxyeinrichtung empfangen und analysiert wird, um Informationen über eine Unterdatei der Basisdatei zu ermitteln;
- eine Anfrage nach der Unterdatei der Basisdatei von der einen oder der anderen Proxyeinrichtung erzeugt und an die Servereinrichtung übermittelt wird, wenn beim Analysieren der Basisdatei Informationen über die mindestens eine Unterdatei ermittelt wird;
- die Servereinrichtung und die Server-Proxyeinrichtung von serverseitigen Einrichtungen und die Clienteinrichtung und die Client-Proxyeinrichtung von clientseitigen Einrichtungen umfasst sind;
- die Anfrage nach der Basisdatei zusammen mit einer die anfragende clientseitige Einrichtung identifizierenden Adreßinformation von der Server-Proxyeinrichtung an die Servereinrichtung übertragen wird;
- in der Servereinrichtung die die anfragende clientseitige Einrichtung identifizierende Adreßinformation empfangen wird;
- die Anfrage nach der Unterdatei zusammen mit der einen oder einer anderen die anfragende clientseitige Einrichtung identifizierenden Adreßinformation von der Server-Proxyeinrichtung an die Servereinrichtung übertragen wird; und
- in der Servereinrichtung die Anfrage nach der Unterdatei sowie die eine/andere Adreßinformation, welche die anfragende clientseitige Einrichtung identifiziert, empfangen werden.

20. Computerprogramm-Produkt zum Übertragen von Daten in einem System mit serverseitigen Einrichtungen, die eine Servereinrichtung und eine Server-Proxyeinrichtung umfassen, und clientseitigen Einrichtungen, die eine Clienteinrichtung und eine Client-Proxyeinrichtung umfassen, wobei das Produkt die folgenden Mittel umfasst:
- auf einem elektronischen Speichermedium aufgezeichnete Mittel zum Erzeugen einer Anfrage nach einer über die Servereinrichtung in dem System abrufbaren Basisdatei einer strukturierten Datenmenge durch eine anfragende der clientseitigen Einrichtungen;
- auf dem elektronischen Speichermedium aufgezeichnete Mittel zum Übertragen der Anfrage nach der Basisdatei von der anfragenden oder von einer anderen der clientseitigen Einrichtungen an die Server-Proxyeinrichtung;
- auf dem elektronischen Speichermedium aufgezeichnete Mittel zum Übertragen der Anfrage nach der Basisdatei zusammen mit einer die anfragende clientseitige Einrichtung identifizierenden Adreßinformation von der Server-Proxyeinrichtung an die Servereinrichtung;
- auf dem elektronischen Speichermedium aufgezeichnete Mittel zum Empfangen der Anfrage nach der Basisdatei sowie der die anfragende clientseitige Einrichtung identifizierende Adreßinformation in der Servereinrichtung und zum Analysieren der Anfrage;
- auf dem elektronischen Speichermedium aufgezeichnete Mittel zum Übertragen der Basisdatei von der Servereinrichtung an die Server-Proxyeinrichtung;
- auf dem elektronischen Speichermedium aufgezeichnete Mittel zum Analysieren der Basisdatei durch die Server-Proxyeinrichtung, um elektronische Informationen über eine Unterdatei der Basisdatei zu ermitteln;
- auf dem elektronischen Speichermedium aufgezeichnete Mittel zum Übertragen einer Anfrage nach der Unterdatei zusammen mit der einen oder einer anderen die anfragende clientseitige Einrichtung identifizierenden Adreßinformation von der Server-Proxyeinrichtung an die Servereinrichtung, wenn beim Analysieren der Basisdatei elektronische Informatitinen über die Unterdatei ermittelt werden;
- auf dem elektronischen Speichermedium aufgezeichnete Mittel zum Empfangen der Anfrage nach der Unterdatei sowie die eine/andere Adreßinformation, welche die anfragende clientseitige Einrichtung identifiziert, in der Servereinrichtung;
- auf dem elektronischen Speichermedium aufgezeichnete Mittel zum Übertragen der Unterdatei von der Servereinrichtung an die Server-Proxyeinrichtung; und
- auf dem elektronischen Speichermedium aufgezeichnete Mittel zum Übertragen einer Antwortdatenmenge, welche die Basisdatei und die Unterdatei umfasst, von der Server-Proxyeinrichtung an die Client-Proxyeinrichtung.

## Claims

1. A method of transmitting data in a system comprising server-end means which include a server means and a server proxy means and further comprising client-end means which include a client means and a client proxy means, wherein
- an inquiring one of the client-end means generates a request for a base file of a structured dataset adapted to be fetched via the server means in the system;
- the request for the base file is transmitted from the inquiring or another one of the client-end means to the server proxy means;
- the request for the base file together with address information identifying the inquiring client-end means is transmitted by the server proxy means to the server means;
- the request for the base file as well as the address information identifying the inquiring client-end means are received in the server means and the request is analyzed;
- the base file is transmitted from the server means to the server proxy means;
- the base file is analyzed by the server proxy means to find out electronic information about a subfile of the base file;
- a request for the subfile is transmitted from the server proxy means to the server means together with said or some other address information identifying the inquiring client-end means if electronic information about the subfile was determined when analyzing the base file;
- the request for the subfile and said/the other address information identifying the inquiring client-end means are received in the server means;
- the subfile is transmitted from the server means to the server proxy means; and
- a reply dataset including the base file and the subfile are transmitted from the server proxy means to the client proxy means.

2. The method as claimed in claim 1, **characterized in that** the address information identifying the inquiring client-end means includes the network address of the client means and/or the network address of the client proxy means.

3. The method as claimed in claim 1, **characterized in that** the address information identifying the inquiring client-end means is generated and configured in the system, as required.

4. The method as claimed in claim 1, **characterized in that** the address information identifying the inquiring client-end means includes a port number.

5. The method as claimed in claim 1, **characterized in that** the address information identifying the inquiring client-end means includes a supplementary network address in the system.

6. The method as claimed in claim 1, **characterized in that** the address information identifying the inquiring client-end means is generated and configured in the means at the client end.

7. The method as claimed in claim 1, **characterized in that** the address information identifying the inquiring client-end means is generated and configured in the means at the server end.

8. The method as claimed in claim 1, **characterized in that** the one or the other proxy means evaluates script data in the base file and/or the subfile.

9. The method as claimed in claim 1, **characterized in that** the reply dataset comprises compressed data, and that the one or the other proxy means decompresses the compressed data.

10. The method as claimed in claim 1, **characterized in that** the request for the base file is modified, that the reply dataset cannot comprise any compressed data.

11. The method as claimed in claim 1, **characterized in that** the one or the other proxy means buffers data from the reply dataset which are not supposed to be buffered.

12. The method as claimed in claim 11, **characterized in that** the buffered reply dataset is used only for replying to a limited number of further requests by the same client means.

13. The method as claimed in claim 11, **characterized in that** the buffered reply dataset is used only for replying to a limited number of further requests by the same client means, and that the upper limit for the limited number of further requests is 1.

14. The method as claimed in claim 11, **characterized in that** the buffered reply dataset is buffered only as long as it is requested by the client means (for the first time or again) within a respective time interval each.

15. The method as claimed in claim 1, **characterized in that** the client proxy means transmits to the server proxy means storage information indicating which base file(s) and/or subfile(s) still is/are buffered, and that the server proxy means evaluates the storage information received in order to suppress electronic requests for the base file/subfile still buffered and/or prevent forwarding of the base file/subfile still buffered from the server proxy means.

16. The method as claimed in claim 1, **characterized in that** the request for subfiles of the base file is generated by the client proxy means and transmitted to the server means, and that the client proxy means aborts the transmission of the request for one of the subfiles when the client proxy means receives at least parts of the one subfile.

17. The method as claimed in claim 1, **characterized in that** the server proxy means executes prioritization for the forwarding by forwarding the base file with preference.

18. The method as claimed in claim 17, **characterized in that** a transmission bandwidth portion used for the preferential forwarding of the base file is expanded for this purpose.

19. A method of transmitting data in a system comprising a server means and a client means which are interconnected via a plurality of proxy means, including a server proxy means and a client proxy means, wherein
- the client means generates a conditional request for a base file of a structured dataset adapted to be fetched via the server means in the system, and transmits the same to one of the plurality of proxy means, said conditional request comprising a condition;
- a modified request for the base file is derived from the conditional request in the one proxy means by changing the condition;
- the modified request for the base file is transmitted by the one proxy means to the server means;
- the modified request for the base file is received and analyzed in the server means;
- a reply dataset, including the base file, is transmitted from the server means to the one or another one of the plurality of proxy means;
- the reply dataset is received and analyzed by the one or the other proxy means to find out information about a subfile of the base file;
- a request for the subfile of the base file is generated by the one or the other proxy means and transmitted to the server means if information about the at least one subfile is determined when analyzing the base file;
- the server means and the server proxy means are comprised by server-end means and the client means and the client proxy means are comprised by client-end means;
- the request for the base file is transmitted from the server proxy means to the server means together with address information identifying the inquiring client-end means;
- the address information identifying the inquiring client-end means is received in the server means;
- the request for the subfile is transmitted from the server proxy means to the server means together with said or some other address information identifying the inquiring client-end means; and
- the request for the subfile and said/the other address information identifying the inquiring client-end means are received in the server means.

20. A computer program product for transmitting data in a system comprising server-end means which include a server means and a server proxy means, and further comprising client-end means which include a client means and a client proxy means, the product comprising the following means:
- means recorded on an electronic data storage medium for generating a request for a base file of a structured dataset adapted to be fetched via the server means in the system by an inquiring one of the client-end means;
- means recorded on the electronic data storage medium for transmitting the request for the base file from the inquiring or another one of the client-end means to the server proxy means;
- means recorded on the electronic data storage medium for transmitting the request for the base file together with address information identifying the inquiring client-end means from the server proxy means to the server means;
- means recorded on the electronic data storage medium for receiving the request for the base file as well as the address information identifying the inquiring client-end means in the server means and for analyzing the request;
- means recorded on the electronic data storage medium for transmitting the base file from the server means to the server proxy means;
- means recorded on the electronic data storage medium for analyzing the base file by the server proxy means to find out electronic information about a subfile of the base file;
- means recorded on the electronic data storage medium for transmitting a request for the subfile from the server proxy means to the server means together with said or some other address information identifying the inquiring client-end means if electronic information about the subfile is determined when analyzing the base file;
- means recorded on the electronic data storage medium for receiving the request for the subfile and said/the other address information identifying the inquiring client-end means in the server means;
- means recorded on the electronic data storage medium for transmitting the subfile from the server means to the server proxy means; and
- means recorded on the electronic data storage medium for transmitting a reply dataset, including the base file and the subfile, from the server proxy means to the client proxy means.

## Revendications

1. Procédé de transmission de données dans un système comportant des équipements côté serveur qui comprennent un équipement serveur et un équipement proxy serveur, et des équipements côté client qui comprennent un équipement client et un équipement proxy client, procédé dans lequel :
- une demande d'un fichier de base d'une quantité de données structurées accessible dans le système via l'équipement serveur est générée par un équipement demandeur côté client ;
- la demande du fichier de base émise par l'équipement demandeur ou un autre des équipements côté client est transmise à l'équipement proxy serveur ;
- la demande du fichier de base est transmise en même temps qu'une information d'adresse qui identifie l'équipement demandeur côté client par l'équipement proxy serveur à l'équipement serveur ;
- la demande du fichier de base ainsi que l'information d'adresse qui identifie l'équipement demandeur côté client sont reçues dans l'équipement serveur et la demande est analysée ;
- le fichier de base est transmis par l'équipement serveur à l'équipement proxy serveur ;
- le fichier de base est analysé par l'équipement proxy serveur pour déterminer des informations électroniques sur un sous-fichier du fichier de base ;
- une demande du sous-fichier est transmise en même temps que ladite ou une autre information d'adresse qui identifie l'équipement demandeur côté client par l'équipement proxy serveur à l'équipement serveur si, lors de l'analyse du fichier de base, des informations électroniques sur le sous-fichier sont déterminées ;
- la demande du sous-fichier ainsi que ladite / l'autre information d'adresse qui identifie l'équipement demandeur côté client sont reçues dans l'équipement serveur ;
- le sous-fichier est transmis par l'équipement serveur à l'équipement proxy serveur ; et
- une quantité de données de réponse qui comprend le fichier de base et le sous-fichier est transmis par l'équipement proxy serveur à l'équipement proxy client.

2. Procédé selon la revendication 1, **caractérisé en ce que** l'information d'adresse qui identifie l'équipement demandeur côté client comprend l'adresse réseau de l'équipement client et/ou l'adresse réseau de l'équipement proxy client.

3. Procédé selon la revendication 1, **caractérisé en ce que** l'information d'adresse qui identifie l'équipement demandeur côté client est générée et configurée en fonction des besoins dans le système.

4. Procédé selon la revendication 1, **caractérisé en ce que** l'information d'adresse qui identifie l'équipement demandeur côté client comprend un numéro de port.

5. Procédé selon la revendication 1, **caractérisé en ce que** l'information d'adresse qui identifie l'équipement demandeur côté client comprend une adresse réseau complémentaire dans le système.

6. Procédé selon la revendication 1, **caractérisé en ce que** l'information d'adresse qui identifie l'équipement demandeur côté client est générée et configurée dans les équipements côté client.

7. Procédé selon la revendication 1, **caractérisé en ce que** l'information d'adresse qui identifie l'équipement demandeur côté client est générée et configurée dans les équipements côté serveur.

8. Procédé selon la revendication 1, **caractérisé en ce que** l'un ou l'autre équipement proxy évalue des informations de script dans le fichier de base et/ou le sous-fichier.

9. Procédé selon la revendication 1, **caractérisé en ce que** la quantité de données de réponse comprend des données comprimées et que l'un ou l'autre équipement proxy décompresse les données compressées.

10. Procédé selon la revendication 1, **caractérisé en ce que** la demande du fichier de base est modifiée pour que la quantité de données de réponse ne puisse pas comprendre des données compressées.

11. Procédé selon la revendication 1, **caractérisé en ce que** l'un ou l'autre équipement proxy stocke en mémoire intermédiaire des données de la quantité de données de réponse qui ne sont pas prévues pour le stockage intermédiaire.

12. Procédé selon la revendication 11, **caractérisé en ce que** la quantité de données de réponse en mémoire intermédiaire n'est utilisée que pour répondre à un nombre limité d'autres demandes par le même équipement client.

13. Procédé selon la revendication 11, **caractérisé en ce que** la quantité de données de réponse en mémoire intermédiaire n'est utilisée que pour répondre à un nombre limité d'autres demandes par le même équipement client et que la limite supérieure du nombre limité d'autres demandes est 1.

14. Procédé selon la revendication 11, **caractérisé en ce que** la quantité de données de réponse en mémoire intermédiaire ne reste en mémoire intermédiaire que jusqu'à ce qu'elle soit demandée pour la première fois ou une nouvelle fois, chaque fois au sein d'un intervalle de temps, par l'équipement client.

15. Procédé selon la revendication 1, **caractérisé en ce que** l'équipement proxy client transmet à l'équipement proxy serveur des information de mémoire qui indiquent quel(s) fichier(s) de base et/ou sous-fichier(s) est/sont encore en mémoire intermédiaire, et que l'équipement proxy serveur évalue les informations de mémoire reçues pour interdire des demandes électroniques du fichier de base/sous-fichier encore en mémoire intermédiaire et/ou empêcher une retransmission par l'équipement proxy serveur du fichier de base/sous-fichier encore en mémoire intermédiaire.

16. Procédé selon la revendication 1, **caractérisé en ce que** la demande de sous-fichiers du fichier de base est générée par l'équipement proxy client et transmise à l'équipement serveur et que l'équipement proxy client interrompt la transmission de la demande d'un des sous-fichiers lorsque l'équipement proxy client reçoit au moins des parties dudit sous-fichier.

17. Procédé selon la revendication 1, **caractérisé en ce que** l'équipement proxy serveur affecte une priorité pour la retransmission, le fichier de base étant retransmis de préférence.

18. Procédé selon la revendication 17, **caractérisé en ce que** pour la retransmission préférée du fichier de base, une part de largeur de bande transmission utilisée à cet effet est agrandie.

19. Procédé de transmission de données dans un système comportant un équipement serveur et un équipement client qui sont reliés par plusieurs équipements proxy, lesquels comprennent un équipement proxy serveur et un équipement proxy client, procédé dans lequel :
- une demande conditionnelle d'un fichier de base d'une quantité de données structurées accessible dans le système via l'équipement serveur est générée par l'équipement client et transmise à l'un des plusieurs équipements proxy, la demande conditionnelle comprenant une condition ;
- à partir de la demande conditionnelle, une demande modifiée du fichier de base est dérivée dans ledit équipement proxy en changeant la condition ;
- la demande modifiée du fichier de base est transmise par ledit équipement proxy à l'équipement serveur ;
- la demande modifiée du fichier de base est reçue et analysée dans l'équipement serveur ;
- une quantité de données de réponse qui comprend le fichier de base est transmis par l'équipement serveur audit ou à un autre des plusieurs équipements proxy ;
- la quantité de données de réponse est reçu et analysé par l'un ou l'autre équipement proxy pour déterminer des informations sur un sous-fichier du fichier de base ;
- une demande du sous-fichier du fichier de base par l'un ou l'autre équipement proxy est générée et transmise à l'équipement serveur si, lors de l'analyse du fichier de base, des informations sur ledit ou les sous-fichier(s) sont déterminées ;
- l'équipement serveur et l'équipement proxy serveur sont compris par des équipements côté serveur et l'équipement client et l'équipement proxy client par des équipements côté client ;
- la demande du fichier de base en même temps qu'une information d'adresse qui identifie l'équipement demandeur côté client est transmise par l'équipement proxy serveur à l'équipement serveur ;
- l'information d'adresse qui identifie l'équipement demandeur côté client est reçue dans l'équipement serveur ;
- la demande du sous-fichier est transmise en même temps que ladite ou une autre information d'adresse qui identifie l'équipement demandeur côté client par l'équipement proxy serveur à l'équipement serveur ; et
- la demande du sous-fichier ainsi que ladite/l'autre information d'adresse qui identifie l'équipement demandeur côté client sont reçues dans l'équipement serveur.

20. Produit programme informatique pour transmettre des données dans un système comportant des équipements côté serveur qui comprennent un équipement serveur et un équipement proxy serveur et des équipements côté client qui comprennent un équipement client et un équipement proxy client, le produit comprenant les moyens suivants :
- des moyens enregistrés sur un support d'enregistrement électronique pour générer une demande d'un fichier de base d'une quantité de données structurées accessible dans le système via l'équipement serveur par un équipement demandeur côté client ;
- des moyens enregistrés sur le support d'enregistrement électronique pour transmettre la demande du fichier de base par l'équipement demandeur ou un autre des équipements côté client à l'équipement proxy serveur ;
- des moyens enregistrés sur le support d'enregistrement électronique pour transmettre la demande du fichier de base en même temps qu'une information d'adresse qui identifie l'équipement demandeur côté client par l'équipement proxy serveur à l'équipement serveur ;
- des moyens enregistrés sur le support d'enregistrement électronique pour recevoir la demande du fichier de base ainsi que l'information d'adresse qui identifie l'équipement demandeur côté client dans l'équipement serveur et pour analyser la demande ;
- des moyens enregistrés sur le support d'enregistrement électronique pour la transmission du fichier de base par l'équipement serveur à l'équipement proxy serveur ;
- des moyens enregistrés sur le support d'enregistrement électronique pour l'analyse du fichier de base par l'équipement proxy serveur en vue de déterminer des informations électroniques sur un sous-fichier du fichier de base ;
- des moyens enregistrés sur le support d'enregistrement électronique pour transmettre une demande du sous-fichier en même temps que ladite information d'adresse ou une autre information d'adresse qui identifie l'équipement demandeur côté client par l'équipement proxy à l'équipement serveur, si lors de l'analyse du fichier de base, des informations électroniques sur le sous-fichier sont déterminées ;
- des moyens enregistrés sur le support d'enregistrement électronique pour recevoir la demande du sous-fichier ainsi que ladite information d'adresse / l'autre information d'adresse qui identifie l'équipement demandeur côté client dans l'équipement serveur ;
- des moyens enregistrés sur le support d'enregistrement électronique pour la transmission du sous-fichier par l'équipement serveur à l'équipement proxy serveur ; et
- des moyens enregistrés sur le support d'enregistrement électronique pour la transmission d'une quantité de données de réponse qui comprend le fichier de base et le sous-fichier, par l'équipement proxy serveur à l'équipement proxy client.
